# FASCICULE DE BREVET EUROPEEN

(11) **EP 4 442 146 B1**
(45) Date de publication et mention de la délivrance du brevet: **29.04.2026**
(21) Numéro de dépôt: 24166199.0
(22) Date de dépôt: 26.03.2024
(51) Int. Cl.: A43B 1/00, A43B 9/18, A43B 13/04, A43B 23/02, B29D 35/00, B29D 35/06, B29D 35/12

(54) **ARTICLE CHAUSSANT, EN PARTICULIER POUR LA PRATIQUE D'UN SPORT**
SCHUHWERK, INSBESONDERE ZUM AUSÜBEN EINES SPORTS
ARTICLE OF FOOTWEAR, IN PARTICULAR FOR PRACTISING A SPORT

(30) Priorité: 06.04.2023 FR 2303430
(43) Date de publication de la demande: 09.10.2024
(73) Titulaire: Decathlon, 59650 Villeneuve d'Ascq (FR)
(72) Inventeur: GUILLOT, Murielle, 59650 VILLENEUVE D'ASCQ (FR); BENADDI, Stéphane, 59650 VILLENEUVE D'ASCQ (FR); CULLIER, Antoine, 59650 VILLENEUVE-D'ASCQ (FR); RAMINA, Michele, 59650 VILLENEUVE D'ASCQ (FR); JOLY, Audrey, 59650 VILLENEUVE D'ASCQ (FR)
(74) Mandataire: Germain Maureau

(56) Documents cités:
- EP-B1- 3 585 200
- CN-A- 112 120 351
- US-A1- 2016 302 508
- US-A1- 2022 143 873
- US-A1- 2023 002 577

## Description

La présente invention concerne le domaine de la fabrication des articles chaussant, par exemple les chaussures, et en particulier de la fabrication d'articles chaussant comprenant une semelle légère et amortissante, et en particulier les articles chaussant pour la pratique d'un sport.

Les articles chaussants, en particulier les chaussures, et plus particulièrement les chaussures de sport, comprennent généralement une semelle et une tige fabriquées à partir de multiples composants dans des matériaux très variés, car assurant des fonctions différentes.

Les composants de la semelle et de la tige assurent des fonctions d'amorti, de relance, de protection et maintien du pied, de gestion de l'évacuation de la chaleur et de la transpiration, d'imperméabilité, de résistance à l'abrasion, ou encore de souplesse,...etc, et ce selon des zones différentes de l'article chaussant.

Ces différents composants sont dans des matériaux différents, et assemblés par différentes techniques, par exemple par couture, par collage ou encore par soudure. La multiplicité de la nature des composants complexifie le procédé de fabrication de l'article chaussant, et nécessite beaucoup d'énergie (par exemple chaleur pour souder, consommation d'électricité pour les machines-outils, consommation d'eau...) pour sa réalisation, ce qui impacte son bilan en gaz à effet de serre, notamment en dioxyde de carbone.

Par ailleurs, une fois ces articles chaussants usagés, ils sont enfouis en terre, ou encore incinérés, ce qui contribue encore à impacter négativement le bilan en dioxyde de carbone du cycle de vie d'un article chaussant. On estime que seulement 2% du volume des articles chaussants consommés annuellement en Europe sont recyclés, au moins en partie. Lorsque les articles chaussants sont recyclés, ils sont recyclés dans des procédés à faible valeur ajoutée et avec des débouchés limités en termes de volume, par exemple pour la fabrication d'aires de jeux amortissantes.

On propose ainsi des articles chaussants en matériau biodégradable, lequel se décomposera naturellement en quelques mois. Cependant, la biodégradabilité ne peut s'effectuer que dans des conditions très spécifiques, ce qui limite sa portée. En outre, ce type de matériau est encore limité et ne donne pas satisfaction pour des chaussures de sport devant satisfaire des critères de performances spécifiques et variés selon les types de sport.

On connait des chaussures comprenant des composants amovibles facilitant ainsi leur séparation et donc leur recyclage. Néanmoins, ce type de chaussure ne donne pas satisfaction en termes de fonctionnalités techniques, et de rendus esthétiques variés possibles. De plus, il y a une réelle difficulté technique à garantir une séparabilité intégrale.

EP 3.081.109 A1 a pour objet une chaussure, comprenant une tige et une semelle, dont une majorité en masse est faite d'un matériau de base thermoplastique sélectionné parmi le polyuréthane thermoplastique, le polyamide, le polyéthylène téréphtalate, ou le polybutylène téréphtalate. Les matériaux indiqués ci-avant peuvent être difficile à recycler, en particulier s'agissant du polyuréthane. En effet, le polyuréthane a tendance à se dégrader dans le temps par oxydation, et à jaunir. En outre, il est nécessaire de sécher les granulés de TPU avant de les transformer afin de conserver leurs propriétés originales. De plus, les températures de fusion de ces matériaux sont élevées, environ 180°C pour le TPU, et de l'ordre de 230°C - 260°C pour les polyamides et les polyesters. Les températures nécessaires à la transformation à chaud des polyesters et des polyamides étant plus élevées que celles nécessaires à la transformation à chaud des polyuréthanes, la mise en forme à chaud de granulés plastiques issus d'un mélange de TPU, avec des polyamides ou des polyesters, dégradent les propriétés des polyuréthanes. En outre, ces matériaux polymères sont couteux, peu disponibles, et avec un potentiel de réutilisation faible. En effet, ces matériaux sont peu utilisés, et lorsqu'ils sont mis en œuvre, ils sont utilisés dans des applications à haute valeur ajoutée de sorte que les matières vierges - sans aucun polluant- sont privilégiées.

FR 2 993 757 A1 a pour objet une botte imperméable aux liquides ayant une partie de semelle et une partie de tige d'un seul tenant dans au moins un matériau polymère choisi dans des matériaux réticulés comme thermoplastiques. FR 2 993 757 A1 ne concerne pas les chaussures, notamment de sport. FR 2 993 757 A1 propose un système de fixation amovible du chausson intérieure par rapport à la botte externe, et n'aborde pas le problème du recyclage d'un article chaussant. D'ailleurs, des matières principales thermodurcissables comme le caoutchouc sont citées de manière équivalente à côté des matières thermoplastiques pour la fabrication de la botte externe.

US 2019/0366590 A1 a pour objet un procédé de fabrication d'un segment de chaussure à partir de divers déchets de matériaux plastiques comprenant les élastomères thermoplastiques ou l'éthylène-vinyl-acétate. Ledit procédé comprend l'ajout d'un agent de moussage à la composition de départ recyclée pour fabriquer une semelle. Le segment de chaussure est toujours une semelle. US 2019/0366590 A1 ne donne aucune information sur la composition d'une chaussure visant à la fois la semelle et la tige afin que la tige et la semelle soient recyclées dans un même procédé de recyclage sans être séparées. US2016302508A1 divulgue une chaussure de sport comprenant une tige dont la majorité est fabriquée à partir d'un matériau de base thermoplastique et une semelle dont la majorité est également fabriquée à partir du même matériau de base thermoplastique.

Il existe donc un besoin pour diminuer les émissions de gaz à effet de serre produits durant le cycle de vie d'un article chaussant, c'est-à-dire s'étendant de sa fabrication jusqu'à sa mise au rebut.

Il existe également un besoin pour un article chaussant qui soit apte à être recyclé entièrement ou au moins en partie dans un procédé de recyclage à valeur ajoutée, et ainsi notamment dans la fabrication d'un article chaussant, en particulier d'une chaussure, plus particulièrement d'une chaussure de sport.

Il existe également un besoin pour fournir une approche permettant de limiter la quantité de ressources consommées (chauffage, électricité, eau, terrains d'enfouissement, etc..). On recherche également un article chaussant fabriqué à partir de matériaux qui puissent être recyclés dans de nombreuses applications finales, et qui puissent être recyclés plusieurs fois sans dégradation importantes de leurs propriétés.

La présente invention pallie tout ou partie des problèmes précités en ce qu'elle a pour objet, selon un premier aspect, un article chaussant, selon la revendication principale 1.

On entend que deux polymères sont « chimiquement compatibles » au sens de l'invention lorsqu'à l'échelle microscopique ils forment un milieu homogène et qu'il n'est observé aucune phase distincte.

Comme le matériau principal de tige, et éventuellement le ou les matériau(x) auxiliaire(s) de tige, et le matériau principal de semelle, et éventuellement le ou les matériau(x) auxiliaire(s) de semelle, est/sont sélectionné(s) parmi les mêmes matériaux, ou sont chimiquement compatibles entre eux, leur adhésion est facilitée, ainsi que la fabrication de l'article chaussant et également son recyclage. En effet, il n'est pas nécessaire de séparer tous les composants de l'article chaussant pour le recycler. Le recyclage peut être effectué en une seule étape en broyant l'article chaussant puis en formant des granulés à partir desdits broyats. La demanderesse a trouvé de manière surprenante que les matériaux principaux de semelle et de tige listés ci-dessus ont pour avantage qu'ils peuvent se présenter sous des formes très différentes dans un usage chaussure et peuvent être recyclés plusieurs fois.

Avantageusement, les matériaux principaux, et éventuellement auxiliaires, de tige et de semelle, sont sélectionnés en sorte que les granulés, au moins en partie recyclés, soient aptes à être transformés par n'importe quelle technique de mise en forme des plastiques (notamment à chaud), par exemple par injection moulage, par injection moussage, par extrusion moulage, par extrusion soufflage, par thermoformage ou encore par thermomoulage. Les granulés issus de l'article chaussant selon l'invention recyclé peuvent être utilisés dans la fabrication d'une semelle ou encore d'un composant de chaussure (tel qu'un contrefort arrière, un bout dur avant, ou encore un renfort latéral) ou encore dans la fabrication d'un fil (par exemple par extrusion filage) pour la fabrication d'un composant textile (par exemple la fabrication d'un composant de tige ou de la totalité d'une tige par tricotage ou tissage) ou d'un composant en mousse. Les granulés issus de l'article chaussant peuvent être également utilisés dans la fabrication d'une botte.

Lesdits granulés peuvent être également transformés en un non-tissé, par exemple par une technique dite Meltblown ou Spunbond ou par leur combinaison, tel qu'un non-tissé dit SMS (Spunbond/Meltblown/Spunbond) par exemple.

Le matériau principal de tige peut comprendre au moins l'un des matériaux suivants : un copolyester thermoplastique, le polytéréphtalate d'éthylène.

Le copolyester thermoplastique peut être un copolymère à blocs comprenant des segments rigides de polyester et des segments souples de polyéther et/ou de polyester, et notamment le TPEE ou le TPC-ET.

La tige peut comprendre une partie inférieure comprenant un copolyester thermoplastique qui est un copolymère à blocs comprenant des segments rigides de polyester et des segments souples de polyéther et/ou de polyester, et notamment le TPEE ou le TPC-ET.

La tige peut comprendre une partie supérieure qui comprend du polytéréphtalate d'éthylène ou un copolyester thermoplastique qui est un copolymère à blocs comprenant des segments rigides de polyester et des segments souples de polyéther et/ou de polyester, par exemple le TPEE. La partie supérieure comprend avantageusement un composant principal de tige dans ledit matériau principal de tige.

La partie supérieure peut comprendre, notamment au niveau d'une région d'avant-pied, un ensemble recouvert extérieurement par le composant principal de tige, ledit ensemble comprenantune couche supérieure en polytéréphtalate d'éthylène, une couche inférieure en polytéréphtalate d'éthylène, une couche centrale en copolymère thermoplastique et entourée vers le haut et vers le bas d'une couche intermédiaire d'adhésif, dont une couche intermédiaire supérieure disposée entre la couche centrale et la couche supérieure, et une couche intermédiaire inférieure disposée entre la couche centrale et la couche inférieure. Les couches intermédiaires d'adhésif permettent de lier les différentes couches entre elles. La couche intermédiaire d'adhésif peut être en polytéréphtalate d'éthylène.

La partie supérieure peut comprendre, notamment au niveau d'une région d'avant-pied, le composant principal de tige, qui peut être un textile en polytéréphtalate d'éthylène, le composant principal de tige étant recouvert d'une couche de renfort en polytéréphtalate d'éthylène.

La partie supérieure peut comprendre, notamment au niveau d'une région d'arrière-pied, une couche externe de mousse, notamment perforée, en TPEE (thermoplastic polyether ester elastomer en langue anglaise), une couche centrale de textile en polytéréphtalate d'éthylène tissée en trois dimensions, et une couche intérieure textile de recouvrement en polytéréphtalate d'éthylène, la couche externe étant recouverte par le composant principal de tige qui peut être en polytéréphtalate d'éthylène.

La tige peut comprendre un lacet en polytéréphtalate d'éthylène.

La tige peut comprendre des œillets de laçage, par exemple réalisés sous la forme d'un fil brodé sur la tige. Les œillets de laçage peuvent être en polytéréphtalate d'éthylène.

La tige peut comprendre un renfort supérieur en polytéréphtalate d'éthylène non tissé.

La tige peut comprendre une languette comprenant un renfort en polytéréphtalate d'éthylène non tissé.

L'article chaussant peut comprendre, à l'arrière de l'article chaussant et au-dessus d'une semelle intermédiaire, un anneau de renfort en copolyester thermoplastique.

Le matériau principal de semelle peut comprendre au moins l'un des matériaux suivants : un copolyester thermoplastique, un élastomère thermoplastique de type vulcanisat thermoplastique (TPV) comprenant une phase molle et une phase thermoplastique en copolyester thermoplastique, et un polyuréthane thermoplastique à base ester.

L'élastomère thermoplastique de type vulcanisat thermoplastique (TPV) peut comprendre une phase molle en poly(styrène/butadiène) et une phase thermoplastique en copolymère à blocs comprenant des segments rigides de polyester et des segments souples de polyéther et/ou de polyester. La phase thermoplastique peut ainsi être le TPEE.

La semelle peut comprendre une semelle intermédiaire comprenant un polyuréthane thermoplastique à base ester ou un copolymère à blocs comprenant des segments rigides de polyester et des segments souples de polyéther et/ou de polyester, et notamment le TPEE ou le TPC-ET.

La semelle peut comprendre une semelle d'usure comprenant un polyuréthane thermoplastique à base ester ou un vulcanisat thermoplastique (TPV) comprenant une phase molle en poly(styrène/butadiène) et une phase thermoplastique en copolymère à blocs comprenant des segments rigides de polyester et des segments souples de polyéther, et notamment une phase thermoplastique en TPEE.

Alternativement, la semelle peut comprendre une semelle d'usure comprenant du caoutchouc. Dans ce cas, la semelle d'usure est avantageusement fixée sur la semelle intermédiaire à l'aide d'un primaire de collage spécifique, qui permet lorsqu'il est soumis à la chaleur de facilement désassembler la semelle d'usure en vue du recyclage de la chaussure.

L'article chaussant peut comprendre une première de propreté comprenant un copolymère à blocs comprenant des segments rigides de polyester et des segments souples de polyéther et/ou de polyester, et notamment le TPEE ou le TPC-ET.

Avantageusement, la tige et/ou la semelle comprend/comprennent chacune, un matériau recyclé d'une semelle et/ou de la tige d'une autre chaussure, et/ou un matériau recyclé d'une semelle et/ou de la tige d'une botte.

Le rapport de la masse du matériau principal de tige, et éventuellement de la masse du ou des matériau(x) auxiliaire(s) de tige, sur la masse totale de la tige peut être supérieur ou égal à 40%.

Le rapport de la masse dudit matériau principal de tige et de la masse du ou des matériau(x) auxiliaire(s) de tige, sur la masse totale de la tige peut être supérieur ou égal à 50%.

Le rapport de la masse du matériau principal de semelle, et éventuellement de la masse du ou des matériau(x) auxiliaire(s) de semelle, sur la masse totale de la semelle peut être supérieur ou égal à 40%.

Le rapport de la masse dudit matériau principal de semelle et de la masse du ou des matériau(x) auxiliaire(s) de semelle, sur la masse totale de la semelle peut être supérieur ou égal à 50%.

Le matériau principal de tige, et éventuellement le ou les matériau(x) auxiliaire(s) de tige, et le matériau principal de semelle, et éventuellement le ou les matériau(x) auxiliaire(s) de semelle, peuvent avoir une densité inférieure ou égale à 1,5 g/cm³, de préférence inférieure ou égale à 1,05 g/cm³.

Avantageusement, le matériau principal de semelle, et éventuellement le ou les matériau(x) auxiliaire(s) de semelle, est/sont issu(s) au moins en partie du recyclage d'au moins un autre article chaussant.

La tige peut comprendre un corps de tige comprenant : une partie principale imperméable comprenant deux couches en PET dont une couche de textile et une membrane, une couche de renfort en polytéréphtalate de butylène laminée avec la partie principale pour former la couche la plus interne du corps de tige, et un joint situé en partie inférieure du corps de tige et comprenant un polyuréthane thermoplastique et du polytéréphtalate d'éthylène.

Le composant principal de tige peut être laminé avec une membrane en polytéréphtalate d'éthylène ou enduit avec du polytéréphtalate d'éthylène, à l'intérieur et/ou à l'extérieur de la tige.

L'invention a également pour objet un procédé de selon la revendication 24.

La description divulgue également un procédé de fabrication d'au moins une partie d'un article chaussant décrit ci-dessus, par exemple une chaussure, et notamment un article chaussant pour la pratique d'un sport, le procédé étant caractérisé en ce qu'il comprend les étapes suivantes:
- mettre à disposition un moule définissant une cavité ouverte, une forme d'au moins une partie de la cavité correspondant à une forme d'une semelle de l'article chaussant, la cavité étant configurée pour recevoir, via au moins un canal d'injection débouchant dans la cavité, un mélange comprenant une matière fondue et un fluide supercritique;
- placer un rebord d'une ouverture de la cavité ouverte au contact d'une zone d'accostage d'une surface d'au moins une partie d'une tige de l'article chaussant, de manière à ce que la surface de l'au moins une partie de la tige assure une fermeture de la cavité au niveau du contact entre la zone d'accostage et le rebord, une majorité en masse de la tige étant faite d'un matériau principal de tige, la tige comprenant éventuellement en outre un ou plusieurs matériau(x) auxiliaire(s) de tige ;
- pressuriser la cavité ;
- injecter le mélange dans la cavité ;
- dépressuriser la cavité du moule, pour déclencher une expansion du mélange dans la cavité et former la semelle dans un matériau moussé résultant de l'expansion du mélange, l'au moins une partie de la surface de l'au moins une partie de la tige étant prise dans ledit matériau moussé de la semelle, une majorité en masse de la semelle étant faite d'un matériau principal de semelle, la semelle comprenant éventuellement en outre un ou plusieurs matériau(x) auxiliaire(s) de semelle,

le procédé étant en outre caractérisé en ce que le matériau principal de tige, et éventuellement le ou les matériau(x) auxiliaire(s) de tige, est/sont sélectionné(s) parmi les polyesters et les matériaux chimiquement compatibles avec les polyesters ;
et en ce que le matériau principal de semelle, et éventuellement le ou les matériau(x) auxiliaire(s) de semelle, est/sont sélectionné(s) parmi les polyesters et les matériaux chimiquement compatibles avec les polyesters.

On obtient ainsi une chaussure légère, amortissante et recyclable, ne nécessitant de préférence pas l'application de colle ou d'agent de liaison entre la tige et la semelle. On peut s'affranchir d'une étape de collage entre la tige et la semelle qui nécessite l'utilisation de machines de réactivation et d'assemblage, ce qui permet de limiter la consommation d'énergie. La chaussure est donc non seulement recyclable, mais également moins impactante sur le plan environnemental. En outre, la fabrication est automatisée et une relocalisation de la fabrication à proximité du lieu de commercialisation est possible.

De préférence, le procédé ne comprend pas d'étape de collage entre la tige et la semelle.

Selon ces dispositions, le procédé permet d'obtenir, en une seule étape d'injection, une semelle légère et amortissante de l'article chaussant reliée à une partie d'une tige de l'article chaussant, avec une bonne résistance au décollement de la semelle et de la tige.

Selon ces dispositions, une pression de pressurisation dans la cavité suivi d'une dépressurisation dans la cavité permet une expansion du mélange et l'obtention du matériau moussé léger et amortissant de la semelle.

Selon ces dispositions, la densité de la semelle est comprise entre 0,1 g/cm³ et 0,4 g/cm³, de préférence entre 0,15 g/cm³ et 0,25 g/cm³.

Selon un mode de mise en œuvre, une pression de pressurisation de la cavité est comprise entre 10 et 50 bars, de préférence 15 bars.

Selon un mode de mise en œuvre, le procédé comprend en outre, préalablement à l'étape de pressurisation de la cavité, l'étape suivante :
- placer un couvercle sur le moule de manière à former avec le moule un volume fermé comprenant la cavité, et une partie complémentaire de la cavité dans ledit volume fermé, l'au moins une partie de la tige se trouvant à l'intérieur dudit volume fermé, la partie complémentaire et la cavité se trouvant de part et d'autre de la fermeture de la cavité au niveau du contact entre la zone d'accostage et le rebord.

Une pression de pressurisation dans la partie complémentaire du volume fermé permet d'éviter des fuites, au niveau du contact entre la zone d'accostage et le rebord, d'un gaz de pressurisation de la cavité.

Selon un mode de mise en œuvre, le procédé comprend une étape d'assemblage de la partie de la tige reliée à la semelle, avec une autre partie de la tige, l'assemblage formant l'article chaussant.

Selon un mode de mise en œuvre, l'étape d'assemblage comprend une couture de l'autre partie de la tige avec la partie de la tige reliée à la semelle.

Selon un mode de mise en œuvre, le procédé comprend en outre les étapes suivantes, mises en œuvre avant l'étape de placement du rebord de l'ouverture de la cavité ouverte au contact de la zone d'accostage d'une surface de l'au moins une partie d'une tige :
- mettre à disposition un support ayant une forme correspondant à une forme d'un pied,
- recouvrir, au moins en partie, une surface externe du support avec l'au moins une partie de la tige de l'article chaussant, l'au moins une partie de la surface de l'au moins une partie de la tige recouvrant une partie de la surface externe du support correspondant à une plante dudit pied,
de sorte qu'après le placement du couvercle sur le moule, le volume fermé comprend en outre le support avec l'au moins une partie de la tige.

Selon un mode de mise en œuvre, l'au moins une partie de la tige est une tige complète. Selon un mode de mise en œuvre, le support est réalisé en aluminium, en acier, ou en plastique.

Selon ces dispositions, le procédé permet d'obtenir, en une seule étape d'injection et avec un seul moule, un article chaussant complet comprenant la semelle de l'article chaussant relié à la tige complète de la chaussure.

Selon un mode de mise en œuvre, le moule est en une seule partie.

Selo un mode de mise en œuvre, le moule comprend au moins deux parties et l'étape de mise à disposition comprend une étape d'assemblage des au moins deux parties pour former le moule.

Selon un mode de mise en œuvre, la cavité est configurée pour recevoir le mélange via au moins deux canaux d'injections débouchant dans la cavité.

Selon ces dispositions, le procédé permet d'obtenir plus rapidement encore, et avec un remplissage plus homogène de la cavité du moule, une semelle de l'article chaussant relié à une partie de la tige de l'article chaussant.

Selon un mode de mise en œuvre, le moule comprend l'au moins un canal d'injection.

Selon un mode de mise en œuvre, le support comprend l'au moins un canal d'injection.

Selon un mode de mise en œuvre, le procédé comprend une étape d'encollage de l'au moins une partie de la surface de l'au moins une partie de la tige, l'étape d'encollage étant réalisée avant l'étape d'injection.

Selon un mode de mise en œuvre, l'au moins une partie de la surface de l'au moins une partie de la tige comprend des fils thermo fusibles configurés pour fondre à une température d'injection du mélange.

Selon ces dispositions, la résistance au décollement de la semelle et de la tige est renforcée.

Selon un mode de mise en œuvre, le procédé comprend en outre les étapes suivantes :
- mettre à disposition des inserts configurés pour être positionnés dans la cavité du moule ;
- positionner les inserts dans la cavité du moule.

Selon un mode de mise en œuvre, les inserts sont positionnés pour s'insérer au niveau d'une surface externe de la semelle, ou pour être noyés à l'intérieur de la semelle.

Selon ces dispositions, la résistance à l'abrasion de la semelle est renforcée, ou un dynamisme de la semelle est amélioré, selon que respectivement les inserts sont insérés vers une portion externe de la semelle, avec par exemple un ou des inserts en caoutchouc ou en matériau thermoplastique, ou noyés à l'intérieur de la semelle, avec par exemple un ou des inserts en plaque de carbone ou en matériau thermoplastique.

Selon un mode de mise en œuvre, l'au moins une partie de la surface de l'au moins une partie de la tige est au moins en partie trouée ou ouverte.

Selon ces dispositions, la résistance au décollement de la semelle et de la tige est renforcée.

Selon un mode de mise en œuvre, l'au moins une partie de la surface de l'au moins une partie de la tige est texturée ou ajourée au contact de la zone d'accostage.

Selon ces dispositions, la résistance au décollement de la semelle et de la tige est encore renforcée.

Selon ces dispositions on obtient une résistance au décollement supérieure à 2,5 N/mm, mesurée selon la norme ISO NF EN 1392.

Selon un mode de mise en œuvre, la matière fondue comprend un polyester, et/ou un matériau chimiquement compatible avec les polyesters.

Le polyester peut être choisi parmi les polyesters décrits ci-dessus et leurs mélanges.

Selon un mode de mise en œuvre, le fluide supercritique est de l'azote dans un état supercritique ou du gaz carbonique dans un état supercritique ou un mélange d'azote et de gaz carbonique dans un état supercritique.

Selon un aspect, l'invention concerne une chaussure, et notamment un article chaussant pour la pratique d'un sport, obtenu par le procédé selon l'un des modes de mise en œuvre décrit ci-avant.

Selon un autre aspect, la description divulgue un dispositif pour la fabrication d'au moins une partie d'un article chaussant, le dispositif comprenant un moule définissant une cavité ouverte, une forme d'au moins une partie de la cavité correspondant à une forme d'une semelle de l'article chaussant, la cavité étant configurée pour recevoir, via au moins un canal d'injection débouchant dans la cavité, un mélange comprenant une matière fondue et un fluide supercritique, un rebord d'une ouverture de la cavité ouverte étant configuré pour être placé au contact d'une zone d'accostage d'une surface d'au moins une partie d'une tige de l'article chaussant, de manière à ce que la surface de l'au moins une partie de la tige assure une fermeture de la cavité au niveau du contact entre la zone d'accostage et le rebord, de sorte que ledit dispositif est ainsi configuré pour mettre en œuvre le procédé selon l'un des modes de mise en œuvre décrit ci-avant.

Selon un mode de réalisation, le dispositif comprend en outre un couvercle configuré pour être placé sur le moule de manière à former avec le moule un volume fermé comprenant la cavité, et une partie complémentaire de la cavité dans ledit volume fermé, l'au moins une partie de la tige de l'article chaussant se trouvant à l'intérieur dudit volume fermé, la partie complémentaire et la cavité se trouvant de part et d'autre de la fermeture de la cavité au niveau du contact entre la zone d'accostage et le rebord, le dispositif étant ainsi configuré pour mettre en œuvre le procédé selon l'un des modes de mise en œuvre décrit ci-dessus.

Selon un mode de réalisation, le dispositif comprend en outre un support ayant une forme correspondant à une forme d'un pied, une surface externe du support étant configurée pour être recouverte avec l'au moins une partie de la tige de l'article chaussant, l'au moins une partie de la surface de l'au moins une partie de la tige recouvrant une partie de la surface externe du support correspondant à une plante dudit pied.

Les matériaux principaux de tige et de semelle, et éventuellement le ou les matériau(x) auxiliaire(s) de tige et/ou de semelle, sélectionnés dans la présente invention peuvent être des polyesters.

Ces matériaux peuvent ainsi avantageusement être transformés plusieurs fois à chaud sans que leurs propriétés ne se dégradent de manière importante, en particulier à cause de l'oxydation provoquée par l'air et/ou l'humidité. Cette faculté leur permet d'améliorer la longévité de leur cycle de recyclabilité contrairement à certains matériaux polymères, tels que les polyuréthanes notamment, qui s'oxydent dans le temps. Avantageusement, l'article chaussant peut ainsi être recyclé plusieurs fois.

Le matériau principal de tige peut comprendre au moins l'un des matériaux suivants : un copolyester thermoplastique, le polytéréphtalate d'éthylène.

Le matériau principal de semelle peut comprendre au moins l'un des matériaux suivants : un copolyester thermoplastique, un élastomère thermoplastique de type vulcanisat thermoplastique (TPV) comprenant une phase molle et une phase thermoplastique en copolyester thermoplastique.

Le ou les matériau(x) auxiliaire(s) de tige peut/peuvent être différent(s) du matériau principal de tige et/ou du matériau principal de semelle.

Les matériau(x) auxiliaire(s) de tige peuvent être différents entre eux.

Le ou les matériau(x) auxiliaire(s) de semelle peut/peuvent être différent(s) du matériau principal de semelle et/ou du matériau principal de tige.

Les matériau(x) auxiliaire(s) de semelle peuvent être différents entre eux.

On comprend par « le matériau principal ou auxiliaire de tige est identique au matériau principal ou auxiliaire de semelle » que le matériau principal/auxiliaire de tige est dans le même matériau polymère de base que celui du matériau principal/auxiliaire de semelle.

Le même raisonnement s'applique entre deux matériaux auxiliaires de tige ou de semelle qui seraient identiques ou différents.

On comprend par « le matériau principal ou auxiliaire de tige est différent du matériau principal ou auxiliaire de semelle » que le matériau principal/auxiliaire de tige n'est pas dans le même matériau polymère de base que celui du matériau principal/auxiliaire de semelle.

### Tige

De préférence, la tige comprend une région d'avant-pied configurée pour à recouvrir en tout ou partie l'avant du pied, et/ou une région d'arrière-pied configurée pour recouvrir l'arrière-pied en tout ou partie, et/ou une région médiale configurée pour recouvrir un côté médial du pied en tout ou partie, et/ou une région latérale configurée pour recouvrir un côté latéral du pied en tout ou partie, et/ou une région de cou-de-pied configurée pour recouvrir en tout ou partie le cou-de-pied, et/ou une région de jambe configurée pour recouvrir tout ou partie de la jambe.

Dans un mode de réalisation, l'article chaussant est une chaussure, et le matériau principal de tige est un polyester, de préférence le polytéréphtalate d'éthylène ou un copolymère à blocs comprenant des segments rigides de polyester et des segments souples de polyéther.

Le matériau principal de tige et/ou le matériau principal de semelle et/ou le ou les matériau(x) auxiliaire(s) de tige et/ou le ou les matériau(x) auxiliaire(s) de semelle peut/peuvent être un ou des matériau(x) recyclé(s) à partir d'une semelle et/ou de la tige d'une autre chaussure ou d'une botte et/ou de plastique(s) et/ou être issu(s) de la biomasse.

La tige peut comprendre (notamment peut être constituée d') un ou plusieurs composant(s) de tige comprenant (en particulier constitué(s)) ledit matériau principal de tige et/ou un ou plusieurs matériau(x) auxiliaire(s) de tige.

Un composant de tige peut être un composant textile, ou un composant de renfort, ou un composant pour le laçage, ou un composant amortissant, ou un composant alvéolaire tel qu'une mousse, ou un lacet, ou un œillet, ou un bout dur avant, ou un contrefort arrière ou latéral, ou une combinaison de ces derniers.

Le composant textile peut être un tissu, un tricot, un non-tissé, une tresse, un câble, un fil filé de fibres, un fil multi-filamentaire, un fil mono-filamentaire, un ensemble de fibres, ou une combinaison de ces derniers.

Le composant textile peut être un textile (un tricot ou un tissu par exemple) en trois dimensions, c'est-à-dire comprenant des panneaux textiles supérieur et inférieur reliés par des fils intermédiaires s'étendant entre lesdits panneaux textiles.

Le composant textile peut être un composant tricoté, par exemple tricoté sur un métier à tricoter rectiligne, ou sur un métier à tricoter chaine, ou sur un métier à tricoter circulaire chaine ou trame, notamment de petit diamètre.

Le composant textile peut être un tube tricoté, en particulier une chaussette tricotée comprenant une partie de talon tricotée.

De préférence, la tige comprend un ou plusieurs composant(s) de tige assemblés par collage, couture, ou encore une soudure (par exemple par ultrasons ou par haute-fréquence).

De préférence, la tige comprend un composant textile de construction textile unitaire, en particulier de construction tricotée ou tissée unitaire, ledit composant comprenant une région d'avant-pied et/ou une région d'arrière-pied et/ou une région latérale et/ou une région médiale et/ou une région de cou-de-pied.

On comprend par « de construction textile unitaire » que le composant textile ne comprend pas de couture(s) ou de soudure(s) autre(s) que celle(s) éventuellement nécessaire(s) à sa mise en forme, par exemple pour joindre des bords.

Dans un mode de réalisation, la tige comprend un composant alvéolaire, en particulier une mousse, et/ou des billes en mousse, comprenant un matériau qui peut être le matériau principal de tige ou un matériau auxiliaire de tige.

De préférence, la tige comprend un composant alvéolaire, en particulier une mousse, et/ou des billes en mousse, comprenant le matériau principal de tige.

Dans un mode de réalisation, la fraction massique dudit matériau principal de tige dans la tige est supérieure ou égale à 20%, de préférence supérieure ou égale à 30%, encore de préférence supérieure ou égale à 40%.

De préférence, la fraction massique dudit matériau principal de tige dans la tige est inférieure ou égale à 90%, en particulier inférieure ou égale à 80%, plus particulièrement inférieure ou égale à 70%, notamment inférieure ou égale à 60%.

Alternativement, la fraction massique dudit matériau principal de tige dans la tige peut être supérieure ou égale à 60%, de préférence supérieure ou égale à 70%, encore de préférence supérieure ou égale à 80%, préférentiellement supérieure ou égale à 90%.

Dans un mode de réalisation, la fraction de surface occupée par le matériau principal de tige dans la tige est supérieure ou égale à 30%, de préférence supérieure ou égale à 40%, encore de préférence supérieure ou égale à 50%.

De préférence, la fraction de surface occupée par le matériau principal de tige dans la tige est inférieure ou égale à 90%, en particulier inférieure ou égale à 80%, plus particulièrement inférieure ou égale à 70%.

Alternativement, la fraction de surface occupée par le matériau principal de tige dans la tige peut être supérieure ou égale à 60%, de préférence supérieure ou égale à 80%, encore de préférence supérieure ou égale à 90%.

De préférence, la fraction de surface occupée par le matériau principal de tige et par un ou plusieurs matériau(s) auxiliaire(s) de tige dans la tige est supérieure ou égale à 60%, encore de préférence supérieure ou égale à 70%, préférentiellement supérieure ou égale à 80%.

Dans un mode de réalisation, la tige comprend le matériau principal de tige et un premier matériau auxiliaire de tige, la fraction massique du premier matériau auxiliaire de tige dans la tige est supérieure ou égale à 5%, de préférence supérieure ou égale à 20%.

La fraction massique du premier matériau auxiliaire de tige dans la tige est de préférence inférieure ou égale à 60%, de préférence inférieure ou égale à 50%, encore de préférence inférieure ou égale à 40%.

Dans un mode de réalisation, la tige comprend le matériau principal de tige et un ou plusieurs matériau(x) auxiliaire(s) de tige, en particulier un premier et/ou un second matériau(x) auxiliaire(s) de tige; le rapport de la masse dudit matériau principal de tige, et de la masse du ou des matériau(x) auxiliaire(s) de tige, sur la masse totale de la tige est supérieur ou égal à 50%, de préférence supérieur ou égal à 60%, encore de préférence supérieur ou égal à 70%, préférentiellement supérieur ou égal à 80%, en particulier supérieur ou égal à 90%.

Optionnellement, le rapport de la masse dudit matériau principal de tige, et de la masse du ou des matériau(x) auxiliaire(s) de tige, sur la masse totale de la tige est inférieur ou égal à 90% ou 80%.

De préférence, la fraction massique du matériau principal de tige dans la tige est supérieure ou égale à 40% et inférieure ou égale à 80%, encore de préférence inférieure ou égale à 60%.

De préférence, la fraction massique du premier matériau auxiliaire de tige dans la tige est supérieure ou égale à 5%, encore de préférence inférieure ou égale à 40%, encore de préférence inférieure ou égale à 30% ; par exemple compris entre 25% et 40%.

De préférence, la fraction massique du premier matériau auxiliaire de tige dans la tige est supérieure ou égale à 5%, encore de préférence supérieure ou égale à 20%, en particulier supérieure ou égale à 30% et inférieure ou égale à 50%, plus particulièrement supérieure ou égale à 35% et inférieure ou égale à 45%.

### Semelle

La semelle comprend (en particulier est constituée) du matériau principal de semelle et éventuellement d'un ou plusieurs matériau(x) auxiliaire(s) de semelle, notamment différent(s) du matériau principal de semelle.

Le matériau principal de semelle peut comprendre au moins l'un des matériaux suivants : un copolyester thermoplastique, un élastomère thermoplastique de type vulcanisat thermoplastique comprenant une phase molle et une phase thermoplastique en copolyester thermoplastique.

L'élastomère thermoplastique de type vulcanisat thermoplastique comprend une phase molle en poly(styrène/butadiène) et une phase thermoplastique en copolymère à blocs comprenant des segments rigides de polyester et des segments souples de polyéther.

De préférence, la fraction massique du matériau principal de semelle dans la semelle est supérieure ou égale à 25%, encore de préférence supérieure ou égale à 40%, préférentiellement supérieure ou égale à 50%, plus préférentiellement supérieure ou égale à 60%.

De préférence, la fraction massique du matériau principal de semelle dans la semelle est inférieure ou égale à 80%.

De préférence, la fraction massique du premier matériau auxiliaire de semelle, dans la semelle est supérieure ou égale à 10%, encore de préférence inférieure ou égale à 40%, préférentiellement inférieure ou égale à 30%, par exemple compris entre 15% et 25% (bornes supérieure et inférieure incluses).

Dans un mode de réalisation, la semelle comprend le matériau principal de semelle, et éventuellement un ou plusieurs matériau(x) auxiliaire(s) de semelle, notamment un premier et/ou un second matériau(x) auxiliaire(s) de semelle, le rapport de la masse du matériau principal de semelle, et éventuellement de la masse du ou des matériau(x) auxiliaire(s) de semelle, sur la masse totale de la semelle est supérieur ou égal à 30%, de préférence supérieur ou égal à 40%, encore de préférence supérieur ou égal 50%, de préférence supérieur ou égal à 60%, encore de préférence supérieur ou égal à 70%, préférentiellement supérieur ou égal à 80%, en particulier supérieur ou égal à 90%.

Optionnellement, le rapport de la masse du matériau principal de semelle, et éventuellement de la masse du ou des matériau(x) auxiliaire(s) de semelle, sur la masse totale de la semelle est inférieur ou égal à 90%, en particulier inférieur ou égal à 80%, plus particulièrement inférieur ou égal à 70%.

De préférence, la fraction massique du matériau principal de semelle est supérieure ou égale à 55% et inférieure ou égale à 70%.

De préférence, la fraction massique du premier matériau auxiliaire de semelle est supérieure ou égale à 5% et inférieure ou égale à 35%, notamment supérieure ou égale 10% et inférieure ou égale à 30%.

De préférence, la fraction massique du matériau principal de semelle dans la semelle est supérieure ou égale à 40% et inférieure ou égale à 85%, encore de préférence supérieure ou égale à 30%, préférentiellement supérieure ou égale à 40%, notamment supérieure ou égale à 55%.

De préférence, la fraction massique du premier matériau auxiliaire de semelle dans la semelle est supérieure ou égale à 8%, encore de préférence inférieure ou égale à 30%, par exemple compris entre 15% et 25%.

De préférence, la fraction massique du matériau principal de semelle dans la semelle est supérieure ou égale à 50%, encore de préférence supérieure ou égale à 80%, notamment supérieure ou égale à 90%, par exemple de l'ordre de 100%.

De préférence, lorsque la semelle comprend un ou plusieurs matériau(x) auxiliaire(x) de semelle, ce(s) dernier(s) est/sont de préférence noyé(s), telle(s) une/des charge(s), dans une matrice polymère formée par le matériau principal de semelle.

La semelle selon l'invention peut être/peut comprendre une semelle d'usure ou une semelle intermédiaire ou une combinaison de ces dernières.

Dans un mode de réalisation, l'article chaussant comprend une semelle d'usure et une semelle intermédiaire, en particulier la semelle intermédiaire est une semelle amovible.

La semelle intermédiaire peut être disposée de manière amovible dans un vide de réception du pied de l'article chaussant en sorte de venir sous le pied de l'usager.

La semelle intermédiaire peut faire également office de semelle de propreté.

La semelle selon l'invention peut comprendre (être constituée d') un ou plusieurs composant(s) de semelle comprenant (en particulier constitué(s)) ledit matériau principal de semelle et/ou un ou plusieurs matériau(x) auxiliaire(s) de semelle.

Un composant de semelle peut être une semelle d'usure, une semelle intermédiaire, une première de propreté, un composant de talon amortissant (par exemple un donut), un composant textile (tel que défini ci-avant en référence à la tige), un dispositif fonctionnel apportant de la stabilité, ou encore un insert de renfort ou d'amorti, ou un composant alvéolaire, en particulier une mousse ou un ensemble de billes moussées et éventuellement agglomérées et/ou collées.

Dans un mode de réalisation, la semelle comprend/est une semelle intermédiaire comprenant une face extérieure venant en contact directement avec le sol.

Avantageusement, la semelle intermédiaire est configurée pour assurer la fonction de semelle d'usure. L'article chaussant ne comprend donc pas de semelle d'usure.

La semelle intermédiaire est de préférence un composant monobloc.

On choisira de préférence une semelle intermédiaire moussée ayant une bonne résistance à l'abrasion.

Dans un mode de réalisation, la semelle comprend un composant de semelle d'usure, de préférence comprend (ou est) une semelle d'usure, ayant une densité (g/cm³) supérieure ou égale à 0,85 ; de préférence inférieure ou égale à 1,30.

Dans un mode de réalisation, la semelle comprend un composant de semelle intermédiaire, de préférence comprend (ou est) une semelle intermédiaire, ayant une densité (g/cm³) supérieure ou égale à 0,10 ; de préférence inférieure ou égale à 0,90 ; encore de préférence ayant une densité inférieure ou égale à 0,50 ; notamment inférieure ou égale à 0,40.

Dans un mode de réalisation, la semelle comprend un composant de semelle intermédiaire, de préférence comprend (ou est) une semelle intermédiaire, ayant une densité (g/cm³) supérieure à 0,50 et inférieure ou égale à 0,85 ; en particulier inférieure ou égale à 0,75.

Dans un mode de réalisation, la chaussure comprend une première de propreté, en particulier disposé dans le vide de réception du pied de la chaussure en sorte de venir sous le pied lorsque la chaussure est portée.

La première de propreté est de préférence amovible.

Cette disposition est avantageuse lorsque la semelle est injectée sur la tige. En effet, lorsqu'une première de propreté est déjà présente lors du procédé d'injection, cette dernière peut être écrasée et ainsi perdre ses propriétés d'accueil du pied. L'utilisation d'une première de propreté amovible permet de pallier à ce problème.

La première de propreté peut comprendre avantageusement des billes en mousse agglomérées.

La première de propreté peut comprendre avantageusement une mousse. Ladite mousse peut être laminée avec un textile, éventuellement entre deux textiles.

### Définitions

Avantageusement, le matériau principal de tige et/ou le matériau principal de semelle, et éventuellement un ou plusieurs matériau(x) auxiliaire(s) de tige et/ou un ou plusieurs matériau(x) auxiliaire(s) de semelle, a ou ont (notamment chacun) une température de fusion (Tf) et/ou une température de transition vitreuse (Tg), en particulier ladite ou lesdites température(s) de fusion est/sont supérieure(s) à ladite ou auxdites température(s) de transition vitreuse.

On comprend dans le présent texte par chaussure, tout article chaussant ne comprenant pas les bottes.

On comprend dans le présent texte par botte, une botte de pluie ou de neige ou un sabot, en particulier un article chaussant comprenant une tige et une partie de semelle comprenant un matériau polymère en commun formant une majorité en masse de la tige et de la semelle, ladite tige et la semelle étant moulées ensembles.

On comprend dans le présent texte par matériau thermoplastique, tout matériau apte à être ramolli ou fondu par chauffage, et ce suffisamment, sans dégradation de ce dernier, afin qu'il puisse être mis en œuvre dans un procédé de transformation d'un plastique, tels que ceux cités ci-avant, et ce plusieurs fois.

On comprend par majorité en masse de la tige que :
- la fraction massique dudit matériau principal de tige mesurée par rapport à la masse totale de la tige, est supérieure à la fraction massique de n'importe quel autre matériau que comprend la tige; ou
- la fraction massique dudit matériau principal de tige additionnée de la ou des fraction(s) massique(s) respective(s) du ou des matériau(x) auxiliaire(s) de tige, mesurée par rapport à la masse totale de la tige, est supérieure à la fraction massique de n'importe quel autre matériau que comprend la tige et non choisi dans la liste principale définie dans le présent texte; ou
- la fraction de surface occupée par le matériau principal de tige mesurée par rapport à la surface totale de la tige est supérieure à la fraction de surface occupée par n'importe quel autre matériau que comprend la tige ; ou
- la fraction de surface occupée par le matériau principal de tige additionnée de la ou des fraction(s) surfacique(s) respective(s) du ou des matériau(x) auxiliaire(s) de tige, mesurée par rapport à la surface totale de la tige est supérieure à la fraction de surface occupée par n'importe quel autre matériau que comprend la tige et non choisi dans la liste principale définie dans le présent texte.

Le matériau principal de tige, et éventuellement le ou les matériau(x) auxiliaire(s) de tige peut/peuvent ainsi représenter par exemple 30%, 40% ou encore 50% ou 60% en masse de la tige ou de la surface extérieure de la tige.

On comprend par matériau principal de tige, que la fraction massique ou surfacique du matériau principal de tige est supérieure à la fraction massique ou surfacique de n'importe quel matériau auxiliaire de tige, et éventuellement supérieure à la fraction massique ou surfacique de n'importe quel autre matériau que comprend la tige non choisi dans la liste principale définie dans le présent texte.

Lorsque le matériau principal de tige représente par exemple 30% en masse de la tige, le ou les matériau(x) auxiliaire(s) représente(nt) (chacun) moins de 30% en masse de la tige.

La surface extérieure de la tige est de préférence calculée à partir d'une tige projetée à plat. Il peut s'agir par exemple de la surface du patron de la tige avant sa mise en forme en trois dimensions par couture, mais comprenant l'ensemble des composants de tige disposés selon sa surface extérieure.

On comprend par masse totale de la tige, la masse de la tige sur la chaussure finie avec tous ses composants.

On comprend par majorité en masse de la semelle que :
- la fraction massique dudit matériau principal de semelle, mesurée par rapport à la masse totale de la semelle, est supérieure à la fraction massique de n'importe quel autre matériau que comprend la semelle; ou
- la fraction massique dudit matériau principal de semelle additionnée de la ou des fraction(s) massique(s) respective(s) du ou des matériau(x) auxiliaire(s) de semelle, mesurée par rapport à la masse totale de la semelle, est supérieure à la fraction massique de n'importe quel autre matériau que comprend la semelle non choisi dans la liste principale définie ci-avant dans le présent texte.

Le matériau principal de semelle, et éventuellement le ou les matériau(x) auxiliaire(s) de semelle peut/peuvent ainsi représenter 40% ou encore 50% ou 60% en masse de la semelle.

On comprend par matériau principal de semelle que la fraction massique du matériau principal de semelle est supérieure à la fraction massique de n'importe quel matériau auxiliaire de semelle, et éventuellement supérieure à la fraction massique de n'importe quel autre matériau de semelle non choisi dans la liste principale définie dans le présent texte.

Par exemple, lorsque le matériau principal de semelle représente 30% en masse de la semelle, le ou les matériau(x) auxiliaire(s) représente(nt) (chacun) moins de 30% en masse de la semelle.

Dans le présent texte, la fraction massique d'un matériau principal ou auxiliaire de tige dans la tige est le rapport de la masse (g) dudit matériau principal ou auxiliaire de tige sur la masse totale (g) de la tige.

Pour le calcul de la masse totale de la tige afin de définir la ou les fractions massiques en matériaux principal de tige et/ou en matériau(x) auxiliaire(s) de tige, on considère l'ensemble du ou des matériau(x) de tige recouvrant le dessus du pied, c'est-à-dire disposé(s) au-dessus du plan d'appui du pied. Le ou les matériau(x) éventuel(s) de la semelle en liaison avec la tige (partie de semelle d'une chaussette tricotée par exemple) est/sont comptabilisé(s) comme faisant partie de la semelle, en particulier de la semelle intermédiaire ou de la semelle d'usure.

Dans le présent texte, la fraction de surface occupée par le matériau principal ou auxiliaire de tige dans la tige est le rapport de la surface occupée (cm²) par ledit matériau visible sur la surface totale extérieure (cm²) de la tige projetée à plat, la surface extérieure de la tige étant celle orientée à l'extérieur de la chaussure.

Dans le présent texte, la fraction massique d'un matériau principal ou auxiliaire de semelle dans la semelle est le rapport de la masse dudit matériau principal ou auxiliaire sur la masse totale de la semelle.

Lorsqu'un premier composant de tige comprend le matériau principal de tige et un second composant de tige comprend ledit matériau principal de tige, le premier composant et le second composant comprennent chacun un matériau principal de tige dans un même polymère de base, lequel peut être un polyester. Le matériau polymère de base du premier composant peut cependant être différent du matériau polymère de base du second composant de par la dureté ou ses propriétés intrinsèques (masse molaire, degré de polymérisation, quantité de monomère(s)) ou sa présentation (mousse, textile, billes moussées, ...).

L'article chaussant, en particulier la tige et/ou la semelle, peut comprendre environ 20% au plus, en particulier 15% au plus, plus particulièrement 10% au plus, notamment 5% au plus, en masse par rapport à sa masse totale, d'un ou plusieurs matériau(x) contaminant(s). Le ou lesdits matériau(x) contaminant(s) peut/peuvent être choisi(s) parmi les polyuréthanes, les polyamides ou encore les polyesters (par exemple le polyéthylène téréphtalate (PET), ou le polybutylène téréphtalate (PBT)). Ces matériaux contaminants peuvent être issus par exemple de matériaux recyclés.

Dans une sous-variante de réalisation, l'article chaussant est une botte. La botte comprend une semelle d'usure et une tige. La tige comprend une partie de tige inférieure recouvrant le pied, en particulier l'avant-pied, le cou-de-pied, la région médiale, la région latérale, et l'arrière-pied. La tige comprend également une partie de tige supérieure recouvrant au moins en partie la jambe.

De préférence, la partie inférieure de tige et la semelle d'usure sont co-injectées.

Dans une sous-variante, l'article chaussant comprend un sabotin et une partie tubulaire souple configurée pour envelopper au moins en partie la jambe.

De préférence, le sabotin comprend une semelle, notamment une semelle d'usure, et une partie inférieure de tige.

De préférence, la partie tubulaire souple est une partie de tige supérieure.

Dans les deux sous-variantes précédentes, la semelle, notamment d'usure, est en particulier obtenue par l'injection-moulage d'une composition comprenant le matériau principal de semelle, et la partie inférieure de tige est obtenue par injection-moulage, sur la semelle, notamment d'usure, en particulier dans un état encore ramolli, d'une composition comprenant le matériau principal de tige.

Ladite semelle et la partie inférieure de tige peuvent former avantageusement un sabotin.

La partie supérieure de tige peut comprendre une ou plusieurs mousse(s) et un ou plusieurs textile(s) dans au moins un matériau auxiliaire de tige. La tige peut comprendre également une ou des mousse(s) et/ou un ou des textile(s) formant un chausson interne disposé dans le vide d'accueil du pied de la botte et recouvrant en tout ou partie la face interne de la partie inférieure de tige injectée.

De préférence, la fraction massique du matériau principal de semelle dans la semelle est supérieure ou égale à 45%, encore de préférence supérieure ou égale à 50%, en particulier inférieure ou égale à 70%.

La semelle d'usure peut comprendre également un premier matériau auxiliaire de semelle.

La fraction massique du premier matériau auxiliaire de semelle dans la semelle est supérieure ou égale à 5% et inférieure ou égale à 40%, notamment inférieure ou égale à 30%.

De préférence, la fraction massique du matériau principal de tige est supérieure ou égale à 40%, encore de préférence inférieure ou égale à 60%.

La tige peut comprendre un premier matériau auxiliaire de tige, dont la fraction massique dans la tige est supérieure ou égale à 10%, de préférence inférieure ou égale à 35%.

De préférence, le rapport de la masse du matériau principal de tige et de la masse du premier matériau auxiliaire de tige sur la masse totale de la tige est supérieur ou égal à 60%, encore de préférence supérieur ou égal à 70%.

Dans une variante de réalisation, la semelle et la tige sont fabriquées individuellement et jointes l'une à l'autre.

La semelle est de préférence solidarisée à la tige par collage et/ou par couture et/ou par soudure (soudure ultrasons, soudure haute-fréquence ou soudure thermique), par exemple dans un montage type Strobel.

La semelle peut être injectée et former un composant de semelle ou une semelle d'usure et/ou une semelle intermédiaire.

Dans une variante de réalisation, la tige comprend un fil en polyester, conférant ainsi de la souplesse.

De préférence, le fil comprend le matériau principal de tige.

Dans une variante de réalisation, la tige comprend un composant textile, et le composant textile comprend un fil comprenant le matériau principal de tige.

Avantageusement, la partie textile formant une zone de réception du pied comprend un composant textile, en particulier comprenant un fil comprenant le matériau principal de tige.

De préférence, la tige comprend une ou plusieurs bande(s), encore de préférence arrangée(s) pour longer, au moins en partie, l'un au moins des bords suivants de la chaussure : le bord avant, le bord médial, le bord latéral, et le bord arrière.

De préférence, la ou lesdites pièce(s), en particulier bande(s), est/sont solidarisée(s) à la face externe de la partie textile formant une zone de réception du pied, et à la semelle.

De préférence, la ou lesdites pièce(s), notamment bande(s), a/ont (notamment chacune) une épaisseur supérieure ou égale à 0,5 mm et inférieure ou égale à 3 mm.

De préférence, ladite au moins une pièce, notamment bande, est solidarisée à la face externe de ladite partie textile, et éventuellement à la semelle, par fusion d'au moins une partie de sa structure.

De préférence, au moins une partie de ladite au moins une pièce, notamment bande, est disposée entre la semelle et la face externe de la partie textile de réception du pied.

Dans un mode de réalisation, ladite pièce est agencée en sorte de former une partie de recouvrement de tout ou partie du dessus du pied, en particulier comprend une ouverture d'introduction du pied dans ladite partie de recouvrement.

Dans une variante de réalisation, la semelle comprend un composant alvéolaire, en particulier une mousse, et/ou des billes en mousse.

De préférence, les billes en mousse sont agglomérées en un bloc, en particulier sont collées entre-elles à leurs surfaces par fusion.

De préférence, le composant alvéolaire a une densité volumique (g/cm³) inférieure ou égale à 0,75 ; encore de préférence inférieure ou égale à 0,50.

De préférence, le composant alvéolaire est une semelle intermédiaire.

Dans une variante de réalisation, la tige comprend un bout dur avant comprenant le matériau principal de tige ou un matériau auxiliaire de tige, et/ou un contrefort arrière comprenant le matériau principal de tige ou un matériau auxiliaire de tige.

La tige peut comprendre un contrefort arrière ou un bout dur avant.

Dans une variante de réalisation, la tige comprend au moins un œillet de passage d'au moins un élément de laçage, ledit au moins un œillet de passage comprend une bande textile comprenant au moins un fil comprenant le matériau principal de tige ou un matériau auxiliaire de tige.

Dans une variante de réalisation, la tige comprend un composant en mousse comprenant le matériau principal de tige.

La tige peut comprendre un ou plusieurs complexe(s), un complexe comprenant un textile solidarisé avec ledit composant en mousse, de préférence le textile et le composant en mousse comprennent (en particulier sont constitués) du matériau principal de tige.

Ledit composant en mousse, éventuellement assemblé avec un textile, peut être disposé dans la région arrière de talon de la tige afin d'apporter du confort et/ou dans une région médiale de la tige et/ou dans une région latérale de la tige.

Dans une variante de réalisation, la tige et/ou la semelle, comprend/comprennent chacune, un matériau recyclé d'une semelle et/ou de la tige d'une autre chaussure, et/ou un matériau recyclé d'une semelle et/ou de la tige d'une botte.

Le matériau recyclé comprend de préférence le matériau principal de tige et/ou le matériau principal de semelle et/ou le ou les matériau(x) auxiliaire(s) de tige et/ou de semelle.

L'autre chaussure peut être une chaussure selon l'invention.

Dans une variante de réalisation, la masse du matériau principal de tige, et éventuellement la masse du ou des matériau(x) auxiliaire(s) de tige, sur la masse totale de la tige est supérieure ou égale à 40%, de préférence supérieure ou égale à 50%. Dans une variante, le rapport de la masse dudit matériau principal de tige et de la masse du ou des matériau(x) auxiliaire(s) de tige, sur la masse totale de la tige est supérieure ou égale à 50%.

Dans une variante de réalisation, le matériau principal de semelle recouvre au moins en partie la tige, notamment le matériau principal de tige.

De préférence, le matériau principal de semelle remonte sensiblement sur la région d'avant pied et/ou sur la région d'arrière pied et/ou sur la région médiale et/ou sur la région latérale de la tige.

Dans une variante, le matériau principal de semelle est solidarisé à la tige, notamment au matériau principal de tige, sans agent intermédiaire de liaison, par exemple sans agent de collage ou sans couture. Dans une variante de réalisation, la masse du matériau principal de semelle, et éventuellement la masse du ou des matériau(x) auxiliaire(s) de semelle, sur la masse totale de la semelle est supérieure ou égale à 40%, de préférence supérieure ou égale à 50%.

Dans une variante de réalisation, le rapport de la masse dudit matériau principal de semelle et de la masse du ou des matériau(x) auxiliaire(s) de semelle, sur la masse totale de la semelle est supérieure ou égale à 50%, et le matériau principal de semelle.

Dans une variante de réalisation, le matériau principal de tige, et éventuellement le ou les matériau(x) auxiliaire(s) de tige, et le matériau principal de semelle, et éventuellement le ou les matériau(x) auxiliaire(s) semelle, ont une densité (g/cm³) inférieure ou égale à 1,2, de préférence inférieure ou égale à 1,1, encore de préférence inférieure ou égale à 1,05, préférentiellement inférieure ou égale à 1.

Il est parfois nécessaire d'utiliser certains matériaux pour apporter des fonctionnalités particulières à l'article chaussant, en particulier lorsqu'il s'agit d'une chaussure de sport.

Les variantes de réalisation et modes de réalisation selon un premier aspect peuvent être combinés indépendamment les uns avec les autres.

La présente description a pour objet selon un second aspect un procédé de fabrication d'un article chaussant, notamment d'une chaussure, en particulier selon l'une quelconque des variantes de réalisation selon un premier aspect de l'invention, ledit procédé comprenant avantageusement :
- fournir une tige, une majorité en masse de la tige, ou une majorité de la surface extérieure de la tige, est faite d'un matériau principal de tige, et éventuellement d'un ou plusieurs matériau(x) auxiliaire(s) de tige ;
- injecter une semelle, une majorité en masse de la semelle est faite d'un matériau principal de semelle, et éventuellement d'un ou plusieurs matériau(x) auxiliaire(s) de semelle ;

le matériau principal de tige, et éventuellement le ou les matériau(x) auxiliaire(s) de tige, est/sont sélectionné(s) parmi les polyesters et les matériaux chimiquement compatibles avec les polyesters ;
et le matériau principal de la semelle, et éventuellement le ou les matériau(x) auxiliaire(s) de semelle, est/sont sélectionné(s) parmi les polyesters et les matériaux chimiquement compatibles avec les polyesters.

Les définitions, et les fractions massiques, des matériaux principaux et/ou auxiliaires de tige et/ou de semelle décrits ci-dessus s'appliquent également au second aspect.

Le matériau principal de tige peut être identique ou différent du matériau principal de semelle, c'est-à-dire qu'il peut être dans le même matériau polymère de base ou dans un matériau polymère de base différent que le matériau polymère de base du matériau principal de semelle.

La semelle injectée peut être une semelle d'usure ou une semelle intermédiaire ou une combinaison de ces dernières

Dans un premier mode de réalisation, la semelle est injectée directement sur la tige. De préférence, la tige est disposée sur une préforme en forme de pied, puis la semelle est injectée sur la partie inférieure de la tige. La partie inférieure de la tige peut être une première de montage en liaison avec les bords inférieurs de la tige (par exemple lorsque la tige est mise en forme en trois dimensions à l'aide de soudure(s) et/ou couture(s) pour recouvrir le pied) et/ou encore la partie de semelle textile d'un composant textile de tige. Le composant textile de tige peut être un composant textile plan, mis en forme en trois dimensions en sorte de former un chausson d'accueil du pied, par exemple par couture/soudure

Le composant textile de tige peut être une chaussette tricotée comprenant une partie de semelle tricotée intégrée, notamment thermofondue ou thermocompressée.

Avantageusement, la tige est mise en contact au moins en partie avec la semelle injectée dans un état ramolli, puis le refroidissement à la température ambiante de ladite semelle permet de solidariser la tige à la semelle.

De préférence, la solidarisation est effectuée entre la tige et la semelle sans agent de collage.

Les matériaux principaux et/ou auxiliaires de semelle et de tige sélectionnés dans la présente invention permettent de fabriquer une semelle en l'injectant directement sur une tige sans problème d'adhérence, simplifiant ainsi le procédé et réduisant le nombre de matériaux différents utilisés.

Le mélange injecté pour fabriquer la semelle peut comprendre outre le matériau principal de semelle, un plastifiant et/ou une charge (par exemple du carbonate de calcium) et/ou un ou des agent(s) de moussage (par exemple s'il s'agit de la semelle intermédiaire).

Le plastifiant peut être choisi parmi les huiles minérales et/ou les huiles naphténiques ou paraffiniques.

La semelle injectée sur la tige peut être une semelle d'usure ou une semelle intermédiaire. Dans ce dernier cas, au moins un agent de moussage est utilisé en mélange avec le matériau principal de semelle.

Dans un second mode de réalisation, la semelle et la tige sont fabriquées indépendamment l'une de l'autre puis assemblées. La semelle est alors injectée dans une étape de fabrication de la semelle qui est indépendante de l'étape de fabrication de la tige.

La semelle est alors solidarisée, notamment collée via un agent de collage à la partie inférieure de la tige.

Dans un troisième mode de réalisation, la semelle injectée peut être obtenue par une bi-injection, notamment en combinaison avec le premier ou second mode de réalisation.

De préférence, un premier mélange comprenant le matériau principal de semelle, éventuellement en mélange avec un ou plusieurs matériau(x) auxiliaire(s) de semelle, est injecté dans un premier moule à la forme d'une première semelle, puis un second mélange comprenant le matériau principal de semelle et éventuellement au moins un agent de moussage, éventuellement en mélange avec un ou plusieurs autre(s) matériau(x) auxiliaire(s) de semelle, est injecté dans un second moule à la forme d'une seconde semelle et coopérant avec le premier moule en sorte que le second mélange soit injecté et moussée sur le premier mélange non refroidi améliorant ainsi l'adhésion entre la première semelle et la seconde semelle.

La première semelle peut être la semelle d'usure et la seconde semelle peut être la semelle intermédiaire.

Le premier mélange peut être différent du second mélange de part, par exemple le plastifiant utilisé et/ou la couleur et/ou le ou les matériau(x) auxiliaire(s) de semelle, de préférence ils comprennent le même matériau principal de semelle.

La première semelle peut être également une semelle d'usure dans une première couleur, et la seconde semelle peut être une semelle d'usure dans une seconde couleur différente de la première couleur.

La semelle obtenue comprend de préférence une semelle d'usure et une semelle intermédiaire, ou deux semelles d'usure, et peut être solidarisée par collage à la tige, indépendamment du procédé d'injection de la semelle.

Cette bi-injection peut être réalisée directement sur la tige.

Dans une variante, le procédé comprend une étape de traitement d'au moins une partie de la surface de la semelle, notamment de la semelle d'usure et/ou de la semelle intermédiaire, et/ou d'au moins une partie de la surface de la tige, en particulier de la surface d'un ou plusieurs composant(s) textile(s), en sorte d'améliorer l'adhérence de la semelle à la tige et/ou de la semelle d'usure à la semelle intermédiaire et/ou d'un composant fonctionnel (par exemple un renfort latéral, un bout dur avant ou encore un contrefort arrière) au(x) composant(s) textile(s) de la tige.

Ladite étape de traitement comprend une étape d'abrasion légère (notamment désignée par « buffing treatment » en langue anglaise), et/ou une étape de traitement plasma, et/ou une étape de traitement à la flamme, et/ou une étape de traitement corona.

Cette étape permet de solidariser deux composants ensemble, éventuellement sans agent de collage. On évite ainsi l'ajout de matière pouvant se retrouver comme contaminant dans les procédés de recyclage subséquents.

Dans une variante, le matériau principal de semelle, et éventuellement le ou les matériau(x) auxiliaire(s) de semelle, est/sont issu(s) au moins en partie du recyclage d'au moins une autre chaussure ou d'au moins une botte, en particulier d'au moins un article chaussant selon l'une quelconque des variantes de réalisation ou modes de réalisation selon le premier aspect de l'invention.

Dans une variante, le procédé comprend une étape de moussage d'un composant en mousse comprenant le matériau principal de semelle ou au moins un matériau auxiliaire de semelle sur la semelle injectée dans un état ramolli en sorte de solidariser au moins en partie ledit composant en mousse à ladite semelle, notamment sans agent de collage.

La bi-injection peut être effectuée telle que décrite ci-dessus.

La solidarisation entre le composant en mousse et la semelle est effectuée lorsque la semelle injectée est dans un état ramolli, c'est-à-dire avant qu'elle ne soit refroidie à la température ambiante.

Avantageusement, le composant en mousse comprend ledit matériau principal de semelle ou un matériau auxiliaire de semelle tel que décrit dans le présent texte. Le composant en mousse est donc compatible avec le matériau principal de semelle de la semelle injectée ce qui favorise sa solidarisation avec la semelle sans agent intermédiaire.

La présente description a pour objet, selon un troisième aspect ne faisant pas partie de l'invention revendiquée, un procédé de recyclage d'au moins un article chaussant, notamment une chaussure, comprenant la collecte d'au moins un article chaussant, notamment une chaussure, selon l'une quelconque des variantes et modes de réalisation ou obtenu par la mise en œuvre du procédé de fabrication selon l'une quelconque des variantes et modes de réalisation et la transformation dudit au moins un article chaussant, notamment de ladite chaussure, en granulés thermoplastiques.

L'article chaussant, notamment la chaussure, collecté(e) est dans une première étape broyé(e) en sorte d'obtenir des broyats, en particulier ayant au moins une dimension de l'ordre d'au moins 1 mm à 40 mm. Lesdits broyats sont acheminés dans un dispositif d'extrusion-granulation pour l'obtention de granulés thermoplastiques. Ils peuvent au préalable subir une étape de lavage afin d'ôter les poussières.

On comprend par granulés thermoplastiques dans le présent texte, tout granulé ayant une température de transformation à chaud par un procédé de mise en forme de plastique(s), par exemple par extrusion-injection, extrusion-soufflage, pressage à chaud, extrusion-filage.

Lesdits granulés thermoplastiques ont ainsi un comportement de matière thermoplastique lorsqu'ils sont mis en œuvre dans un procédé de transformation à chaud, même s'ils comprennent un ou des matériau(x) thermodurcissable(s) mais en quantité faible afin de ne pas altérer leur capacité à être transformés tels des thermoplastiques.

De préférence, le dispositif d'extrusion-granulation est/comprend une extrudeuse bivis. Avantageusement, ce type d'extrudeuse permet de mieux mélanger la matière broyée.

Avantageusement, il n'est pas nécessaire de séparer les différents composants de l'article chaussant, notamment de la chaussure, car ces derniers sont compatibles entre eux pour leur mise en œuvre dans des procédés de transformation des matières thermoplastiques.

Dans une variante de réalisation, l'étape de transformation comprend, en particulier dans cet ordre:
- une étape de broyage dudit article chaussant, en particulier de ladite au moins une chaussure (notamment de sport), pour l'obtention de particules broyées ;
- une étape de compactage desdites particules broyées pour l'obtention de particules broyées et compactées, en particulier à froid ou à chaud ;
- une étape d'extrusion-granulation desdites particules broyées et compactées pour l'obtention de granulés transformables par un procédé de transformation à chaud de plastique(s).

Avantageusement, l'étape de compactage permet de chasser l'air du ou des matériau(x) recyclé(s) moussé(s) et/ou creux.

De préférence, l'étape de compactage est effectuée à chaud en chauffant lesdites particules broyées, en particulier à une température supérieure ou égale à 60°C et inférieure ou égale à 110°C, par exemple de l'ordre de 70°C à +/- 10°C près. Dans une variante, le procédé de recyclage comprend une étape de transformation à chaud d'au moins une partie desdits granulés thermoplastiques pour la fabrication d'une pièce plastique, notamment formant au moins en partie un article pour la pratique d'un sport.

On comprend dans le présent texte par une pièce plastique formant au moins en partie un article pour la pratique d'un sport que ladite pièce peut former une partie seulement ou sensiblement la totalité d'un article de sport.

Ladite pièce plastique comprend une ou des matière(s) recyclée(s), en particulier provenant desdits granulés thermoplastiques recyclés, éventuellement en mélange avec une ou plusieurs autres matériau(x) pétrosourcé(s) et/ou bisourcé(s) et/ou recyclé(s) et/ou non issu(s) du procédé de recyclage selon la description.

Ladite pièce plastique est avantageusement une voilure de palme, ou encore une palme comprenant une voilure de palme et un logement de réception du pied.

La pièce plastique peut être une poignée, un embout de zipper, une roue, une enveloppe de lampe, ou encore un embout de tuba.

La pièce plastique n'est pas limitée au recyclage dans un article de sport mais peut être mise en œuvre dans toute application pour laquelle la composition de l'article chaussant recyclée a des propriétés mécaniques satisfaisantes.

On comprend dans le présent texte par « plastique » toute matière basée sur la mise en œuvre d'un ou plusieurs (co)(ter)polymère(s) transformé(s) par un procédé à chaud de type extrusion-injection, extrusion-moulage, extrusion-soufflage, thermocompression, ou toute technique équivalente.

La présente description a pour objet, selon un quatrième aspect ne faisant pas partie de l'invention revendiquée, une pièce plastique (en particulier moulée, plus particulièrement de construction moulée unitaire), notamment formant au moins en partie un article pour la pratique d'un sport, en particulier ladite pièce est une voilure de palme ou encore une palme comprenant une voilure de palme et un logement de réception du pied.

Dans un mode de réalisation, ladite pièce est une voilure de palme ou encore une palme comprenant une voilure de palme et un logement de réception du pied.

On comprend par matériau majoritaire en masse que la fraction massique dudit matériau est celle la plus élevée du ou des matériau(x) entrant dans la composition de ladite pièce.

Dans un mode de réalisation, la fraction massique desdits granulés thermoplastiques recyclés dans la pièce plastique est supérieure ou égale à 10%, de préférence supérieure ou égale à 25%, encore de préférence supérieure ou égale à 35%, préférentiellement supérieure ou égale à 45%, notamment supérieure ou égale à 55%, éventuellement supérieure ou égale à 80% ou à 90%.

Les variantes de réalisation, modes de réalisation et définitions des premier, second, troisième et quatrième aspects peuvent être combinées les uns avec les autres à moins qu'il en soit spécifié autrement.

Pour sa bonne compréhension, un mode de réalisation et/ou de mise en œuvre de l'invention est décrit en référence aux dessins ci-annexés représentant, à titre d'exemple non limitatif, une forme de réalisation ou de mise en œuvre respectivement d'un dispositif et/ou d'un procédé selon la description. Les mêmes références sur les dessins désignent des éléments similaires ou des éléments dont les fonctions sont similaires.
[Fig. 1] est une vue en perspective d'un moule, en une seule partie, du couvercle correspondant au moule, et d'une tige de chaussure montée sur un support, avant l'étape de placement de la tige sur le rebord de la cavité du moule,
[Fig. 2] est une vue en perspective d'un moule, en trois partie, du couvercle correspondant au moule, et d'une tige de chaussure montée sur un support, avant l'étape de placement de la tige sur le rebord de la cavité du moule,
[Fig. 3] est une vue en perspective d'un moule, en une partie, du couvercle correspondant au moule, et d'une partie d'une tige d'une chaussure, avant l'étape de placement de la partie de tige sur le rebord de la cavité du moule,
[Fig. 4] est une vue en perspective de la partie de la tige reliée à une semelle obtenue après une mise en œuvre du procédé selon un mode de mise en œuvre de l'invention, et de la chaussure obtenue après une mise en œuvre d'une étape supplémentaire d'assemblage de la partie de la tige avec une autre partie de la tige.
[Fig. 5] est une vue en coupe d'une tige avec son support, placé sur le moule, avant l'étape d'injection, selon un mode de mise en œuvre de l'invention ; sur cette figure le couvercle du moule est représenté avant son placement sur le moule
[Fig. 6] est une vue en coupe d'une tige avec son support, placé sur le moule, sous un couvercle formant avec le moule un espace fermé pressurisé de part et d'autre du rebord de la cavité du moule, avant l'étape d'injection, selon le mode de mise en œuvre de l'invention de la figure 5
[Fig. 7] est une vue en perspective d'une tige avec son support, placé sur le moule, avant l'étape d'injection, selon le mode de mise en œuvre de l'invention des figures 5 et 6; sur cette figure le couvercle du moule est représenté avant son placement sur le moule
[Fig. 8] est une vue en perspective de la chaussure obtenue, avec le support de la tige, après une mise en œuvre du procédé selon le mode de mise en œuvre de l'invention des figures 5, 6, et 7.
[Fig. 9] est une vue en perspective d'un support de tige avec un joint placé sur une zone du support correspondant à une zone d'accostage de la surface de la partie de la tige, selon le mode de mise en œuvre de l'invention correspondant aux figures 5, 6, 7 et 8
[Fig. 10] est une vue en perspective d'une tige avec une surface ouverte au niveau de la partie de la tige destinée à être prise dans le matériau moussé de la semelle obtenue selon un mode de mise en œuvre de l'invention
[Fig. 11] est une vue en perspective d'une autre tige avec une surface pleine au niveau de la partie de la tige destinée à être prise dans le matériau moussé de la semelle obtenue selon un mode de mise en œuvre de l'invention
[Fig. 12] est une vue en perspective d'une autre tige avec une surface trouée au niveau de la partie de la tige destinée à être prise dans le matériau moussé de la semelle obtenue selon un mode de mise en œuvre de l'invention
[Fig. 13] est une vue en perspective d'une autre tige avec une surface ajourée ou texturée à proximité de la zone d'accostage au niveau de la partie de la tige destinée à être prise dans le matériau moussé de la semelle obtenue selon un mode de mise en œuvre de l'invention
[Fig. 14] est une vue en coupe d'une tige avec son support, placé sur un moule comprenant plusieurs canaux d'injection, avant l'étape d'injection, selon un mode de mise en œuvre de l'invention
[Fig. 15] est une vue en coupe d'une tige avec son support, placé sur le moule, avant l'étape d'injection, selon un mode de mise en œuvre de l'invention dans lequel un canal d'injection traverse le support de la tige.
[Fig. 16] est une vue en perspective d'inserts configurés pour être placés dans la cavité du moule de manière à être associés à la semelle obtenue après surmoulage avec le matériau moussé,
[Fig. 17] est une vue coupe d'une tige avec son support placé sur le moule avant l'étape d'injection, avec les inserts placés dans la cavité du moule de manière à être incorporés au matériau moussé formant la semelle,
[Fig. 18] est une vue coupe d'une tige avec son support placé sur le moule, après l'étape d'injection, avec les inserts placés dans la cavité du moule et incorporés au matériau moussé formant la semelle,
[Fig. 19] est un diagramme de séquencement des étapes du procédé, selon un mode de mise en œuvre de l'invention
[Fig. 20] illustre de manière schématique en perspective un exemple d'une chaussure selon l'invention
[Fig. 21] est une vue de détail en coupe de la chaussure de la figure 20, conformément à un premier mode de réalisation.
[Fig. 22] est une vue de détail en coupe de la chaussure de la figure 20, conformément à un deuxième mode de réalisation
[Fig. 23] est une vue de détail en coupe de la chaussure de la figure 20, conformément à un troisième mode de réalisation
[Fig. 24] est une vue est une vue en perspective d'un corps de tige imperméable d'une chaussure.

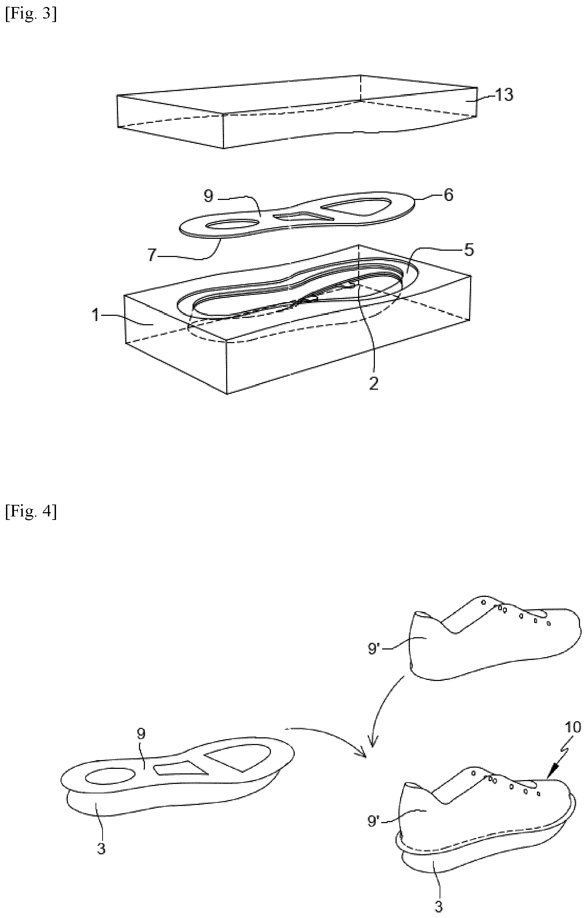

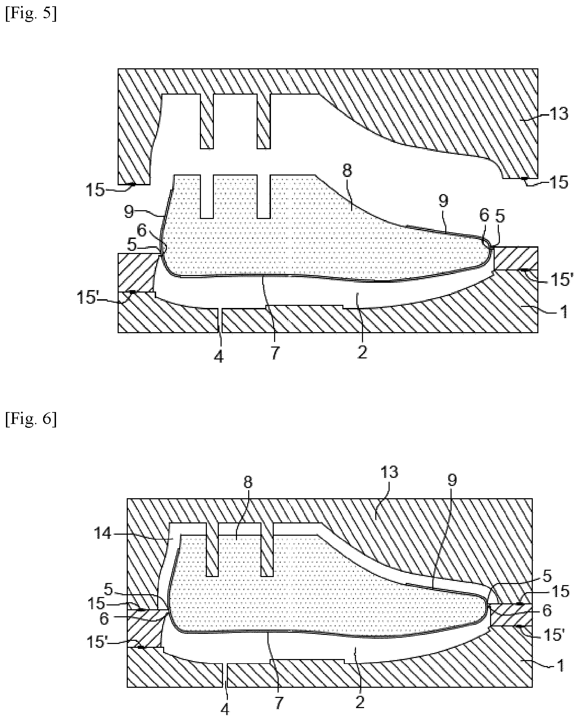

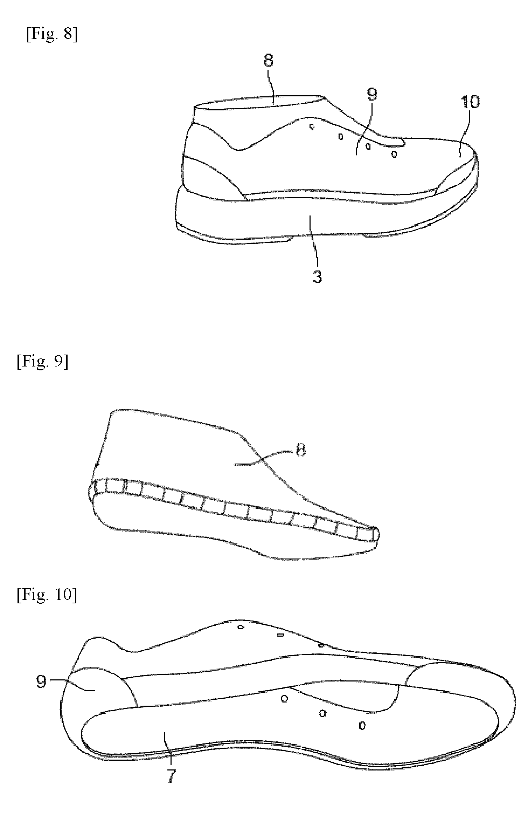

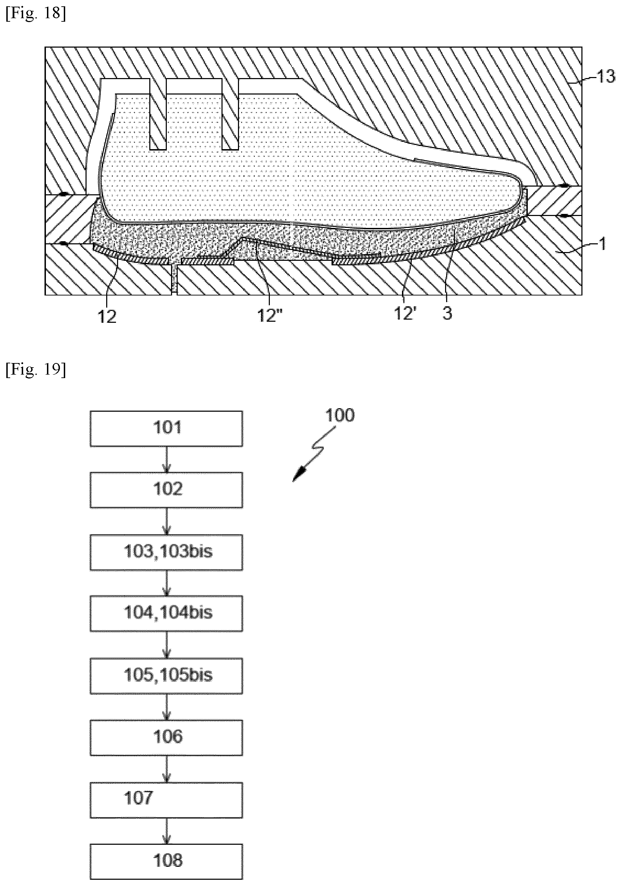

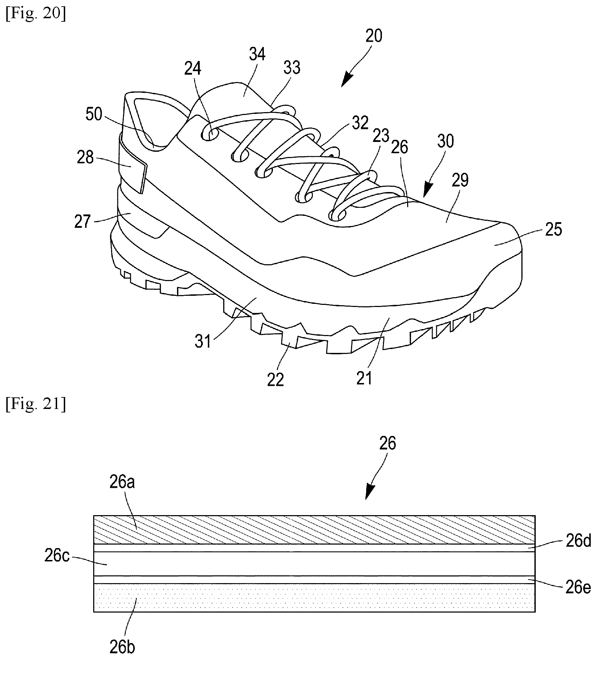

En référence à la figure 19, un procédé 100 de fabrication d'au moins une partie d'un article chaussant selon l'invention, par exemple une chaussure 10 représentée aux figures 4, 8 (la chaussure 20 illustrée sur les figures 20 et 21 peut également être obtenue par ce procédé 100), est mis en œuvre en utilisant une étape d'injection 107, dans une cavité 2 d'un moule 1, d'un mélange supercritique comprenant une matière thermoplastique fondue et un gaz dans un état supercritique, de manière à faire mousser la matière thermoplastique afin d'obtenir des propriétés satisfaisantes d'un matériau moussé qui forme une semelle 3 légère et amortissante de la chaussure 10 ; en particulier, les figures 4 ou 8 présentent la partie de la chaussure 10 obtenue à l'issue du procédé 100, avec la partie 9 de la tige prise dans le matériau moussé de la semelle 3. Pour obtenir ce résultat, la cavité 2 présente au moins en partie une forme correspondant à la forme finale de la semelle 3 en mousse que l'on souhaite obtenir ; cela est illustré notamment aux figures 3 et 5.

Afin de faire mousser la matière thermoplastique fondue pour obtenir ledit matériau moussé qui forme la semelle 3, le procédé consiste à mettre sous pression la cavité 2 du moule 1, notamment par l'injection d'un gaz dans ladite cavité 2, avant d'injecter le mélange supercritique dans la cavité 2, puis de dépressuriser la cavité 2 afin de déclencher une expansion et un moussage du mélange thermoplastique dans la cavité 2 afin d'obtenir le matériau moussé de la semelle 3.

Afin qu'une partie 9 de la tige de la chaussure 10 soit prise dans ledit matériau moussé de la semelle 3, ladite partie 9 de la tige est placée de manière appropriée dans la cavité 2 du moule ; à cet effet, comme cela est illustré aux figures 3 et 5, la cavité 2 comprend une ouverture avec un rebord 5 sur lequel est placé une zone 6, dite zone d'accostage 6, d'une surface 7 de la partie de la tige 9, de manière à ce que la surface 7 de la partie de la tige 9 assure une fermeture de la cavité au niveau du contact entre la zone d'accostage 6 et le rebord 5.

Afin de pouvoir mettre la cavité 2 du moule 1 sous pression, notamment par l'injection d'un gaz dans ladite cavité 2, il est alors indispensable d'assurer une étanchéité notamment au gaz suffisante de la fermeture de la cavité 2 au niveau du contact entre la zone d'accostage 6 et le rebord 5 ; l'épaisseur de la tige étant variable, la tige pouvant prendre des formes complexes, avec des tolérances dimensionnelles importantes, il peut être difficile d'obtenir l'étanchéité recherchée. Une solution particulièrement avantageuse peut être l'utilisation d'une contre pression dans la zone de la tige 9 qui n'est pas immergée dans la cavité 2, i.e. dans la zone de la tige qui est de l'autre côté de la fermeture par rapport à la cavité 2. Sur la figure 5 en particulier, ladite zone de la tige 9 qui est immergée dans la cavité 2 se trouve dans la partie basse de la figure, et la partie de la tige 9 qui n'est pas immergée dans la cavité se trouve au-dessus de la droite joignant les deux points de la zone d'accostage 6, désignés par les références 5, 6 sur les figures 5 et 6.

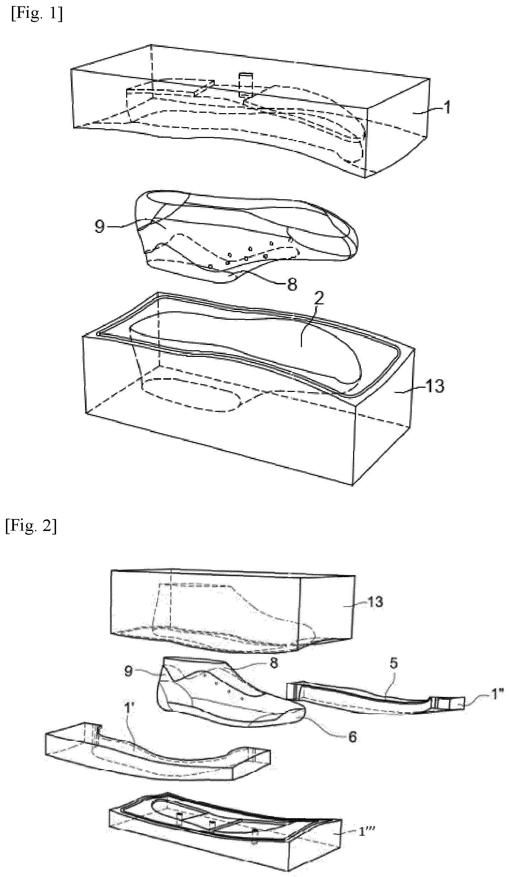

Pour créer la contre pression, avant l'étape d'injection 107 du mélange supercritique dans la cavité 2 du moule 1, le procédé 100 comprend par exemple une étape de placement 103bis d'un couvercle 13 sur le moule 1 de manière à former avec le moule 1 un volume fermé comprenant la cavité 2, et une partie complémentaire 14 de la cavité 2 dans ledit volume fermé, la partie complémentaire 14 et la cavité 2 se trouvant de part et d'autre de la fermeture de la cavité 2 au niveau du contact entre la zone d'accostage 6 et le rebord 5 . La figure 6 notamment présente le couvercle 13 posé sur le moule 1, afin de former le volume fermé comprenant la cavité 2 d'une part et le volume complémentaire 14 d'autre part ; la surface 7 de la partie de la tige 9 destinée à être prise dans le matériau moussé de la semelle 3 se trouve à l'intérieur de la cavité 2 du moule 1, et la surface de l'autre partie de la tige se trouve à l'intérieur de la partie complémentaire 14 de la cavité 2 dans le volume fermé formé par le couvercle 13 placé sur le moule 1. Sur la figure 5 en particulier le couvercle 13 du moule 1 est représenté au-dessus du moule qui lui correspond, mais l'homme du métier comprendra que le procédé fonctionne aussi bien avec un moule 1 au-dessus du couvercle 13 comme cela est illustré à titre d'exemple sur la figure 1 en perspective. Comme cela est illustré sur les figures 5 et 6 des joints 15 peuvent également être placés au niveau d'une zone de contact entre le couvercle 13 et le moule 1 pour assurer une étanchéité appropriée du volume fermé constitué par le couvercle 13 et le moule 1.

La partie complémentaire 14 est pressurisée, par exemple par injection d'un gaz dans ladite partie complémentaire 14 à une pression similaire à la pression de la cavité 2 de façon à ce que les défauts d'étanchéité au niveau de la zone 6 et du rebord 5 ne créent pas de fuite d'un gaz de pressurisation entre la cavité 2 et la partie complémentaire 14, la pression dans la partie complémentaire 14 faisant office de contre pression s'opposant à la pression dans la cavité 2. L'injection 107 du mélange supercritique dans la cavité 2 peut alors avoir lieu, par exemple via un canal d'injection 4 traversant le moule 1, comme cela est illustré sur la figure 6.

Par exemple, une pression de pressurisation de la cavité est comprise entre 5 bars et 50 bars, de préférence égale à 15 bars.

En référence à la figure 19, nous décrivons le déroulement complet des étapes du procédé 100 de fabrication d'une chaussure 10, selon un mode de réalisation qui comprend donc les étapes suivantes :
- mettre à disposition 103 un moule 1 définissant une cavité 2 ouverte, une forme d'au moins une partie de la cavité 2 correspondant à une forme d'une semelle 3 de la chaussure 10, la cavité 2 étant configurée pour recevoir, via au moins un canal 4 d'injection débouchant dans la cavité 2, un mélange comprenant une matière fondue et un fluide supercritique ;
- placer 105 un rebord 5 d'une ouverture de la cavité 2 ouverte au contact d'une zone d'accostage 6 d'une surface 7 d'au moins une partie d'une tige 9 de la chaussure 10, de manière à ce que la surface 7 de l'au moins une partie de la tige 9 assure une fermeture de la cavité au niveau du contact entre la zone d'accostage 6 et le rebord 5 ;
- pressuriser 105bis la cavité 2, notamment par l'injection d'un gaz dans ladite cavité 2 ;
- injecter 107 le mélange dans la cavité 2 ;
- dépressuriser 108 la cavité 2 du moule, notamment par l'évacuation du gaz de ladite cavité 2, pour déclencher une expansion du mélange dans la cavité 2 et former la semelle 3 dans un matériau moussé résultant de l'expansion du mélange, l'au moins une partie de la surface 7 de l'au moins une partie 9 de la tige étant prise dans ledit matériau moussé de la semelle 3.

Selon ces dispositions, le procédé permet d'obtenir, en une seule étape d'injection 107, une semelle légère et amortissante de la chaussure 10 reliée à une partie d'une tige 9 de la chaussure 10, avec une bonne résistance au décollement de la semelle 3 et de la tige 9.

Une pressurisation dans la cavité 2 suivi d'une dépressurisation dans la cavité 2 permet une expansion du mélange et l'obtention du matériau moussé léger et amortissant de la semelle. Une pression de pressurisation dans la partie complémentaire 14 du volume fermé permet d'assurer une étanchéité, notamment au gaz, de la fermeture de la cavité 2, au niveau du contact entre la zone d'accostage 6 et du rebord 5.

La matière fondue est par exemple un polyester.

Le fluide supercritique est par exemple de l'azote dans un état supercritique ou du gaz carbonique dans un état supercritique ou un mélange d'azote et de gaz carbonique dans un état supercritique.

La densité de la semelle 3 obtenue finalement est comprise entre 0,1 g/cm³ et 0,4 g/cm³, de préférence entre 0,15 g/cm³ et 0,25 g/cm³.

En outre, la partie de la tige 9 prise dans le matériau moussé de la semelle 3 permet d'obtenir une résistance au décollement supérieure à 2,5 N/mm, mesurée selon la norme ISO NF EN 1392.

En particulier, l'étape 105bis de pressurisation de la cavité 2 peut par exemple comprendre l'étape suivante :
- placer 103bis un couvercle 13 sur le moule 1 de manière à former avec le moule 1 un volume fermé comprenant la cavité 2, et une partie complémentaire 14 de la cavité 2 dans ledit volume fermé, l'au moins une partie de la tige 9 se trouvant à l'intérieur dudit volume fermé, la partie complémentaire 14 et la cavité 2 se trouvant de part et d'autre de la fermeture de la cavité 2 au niveau du contact entre la zone d'accostage 6 et le rebord 5.

Une pression de pressurisation dans la partie complémentaire 14 du volume fermé permet d'éviter des fuites, au niveau du contact entre la zone d'accostage 6 et le rebord 5, d'un gaz de pressurisation de la cavité 2.

Selon un exemple de mise en œuvre, illustrée sur la figure 3, la partie 9 de la tige est placée directement sur le rebord 5 de l'ouverture de la cavité 2 du moule 1, sans utiliser un support 8 pour maintenir la tige.

En particulier, le procédé peut comprendre une étape complémentaire d'assemblage de la partie de la tige 9 reliée à la semelle 3 obtenue après l'étape de dépressurisation, avec une autre partie 9' de la tige, l'assemblage formant la chaussure 10, comme cela est illustré sur la figure 4. A titre d'exemple, l'étape d'assemblage peut comprendre une couture de l'autre partie 9' de la tige avec la partie de la tige 9 reliée à la semelle 3.

Selon un autre exemple de mise en œuvre, illustré sur les figures 5 et 6, la partie 9 de la tige est d'abord placée sur un support 8 de manière à recouvrir (102) au moins en partie une surface externe dudit support 8, ledit support 8 ayant une forme correspondant à une forme d'un pied ; une partie de la surface 7 de la partie de la tige 9, destinée à être prise dans le matériau moussé de la semelle 3, recouvre une partie de la surface externe du support 8 correspondant à une plante dudit pied. Au cours de l'étape de placement 105 de la partie de la tige 9 sur le rebord 5 de la cavité 2, la partie de la tige 9 est ainsi placée, avec le support 8, sur le rebord 5 de la cavité 2, de sorte qu'après le placement 103bis du couvercle 13 sur le moule 1, le volume fermé comprend en outre le support 8 avec la partie de la tige 9 ; la surface 7 de la partie de la tige 9 destinée à être prise dans le matériau moussé de la semelle 3 se trouve à l'intérieur de la cavité 2 du moule 1, avec une partie correspondante du support 8 , et la surface de l'autre partie de la tige 9, avec une autre partie correspondante du support 8, se trouve à l'intérieur de la partie complémentaire 14 de la cavité 2 dans le volume fermé formé par le couvercle 13 placé sur le moule 1.

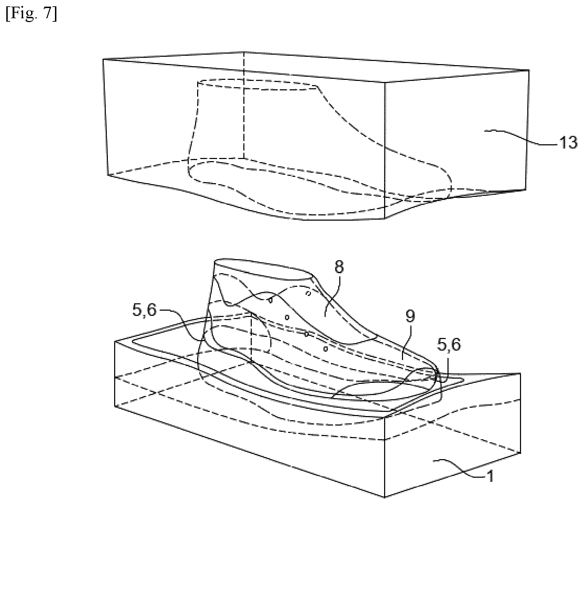

La tige 9 peut par exemple être une tige complète, comme cela est illustré par exemple sur la figure 7.

Le support 8 peut être réalisé, par exemple, en aluminium, en acier, ou en plastique.

Ainsi, le procédé 100 permet d'obtenir, en une seule étape d'injection 107 une chaussure 10 complète comprenant une semelle 3 de la chaussure reliée à une tige 9 complète de la chaussure 10, comme cela est illustré à la figure 8.

Le moule 1 est en une seule partie, ou bien le moule 1 comprend plusieurs parties 1', 1", 1‴, comme cela est illustré sur la figure 2, et l'étape de mise à disposition 103 du moule 1 comprend une étape d'assemblage des différentes parties 1', 1", 1" pour former le moule 1. Par exemple, le moule en plusieurs parties 1', 1", 1‴ peut comprendre un fond de moule 1‴, et deux moitiés 1', 1" d'une partie en anneau du moule, comme cela est illustré sur la figure 2 ; lesdites deux moitiés 1', 1" sont configurées pour former un anneau lorsqu'elles sont assemblées, ledit anneau étant configuré pour former le rebord 5 de la cavité 2 lorsqu'il est posé sur le fond 1‴ de moule 1, ledit rebord 5 étant alors configuré pour recevoir la zone d'accostage 6 de la partie de la tige 9. En outre, comme cela est illustré sur les figures 5 et 6, un ou plusieurs joints 15' peuvent être également placés au niveau d'une zone de contact entre les différentes parties 1', 1", 1‴ du moule pour assurer une étanchéité appropriée du moule 1.

Pour permettre la mise en œuvre de l'étape d'injection 107, la cavité 2 du moule est configurée pour recevoir, via au moins un canal 4, 4', 4", 4"' d'injection débouchant dans la cavité 2, le mélange comprenant une matière fondue et un fluide supercritique.

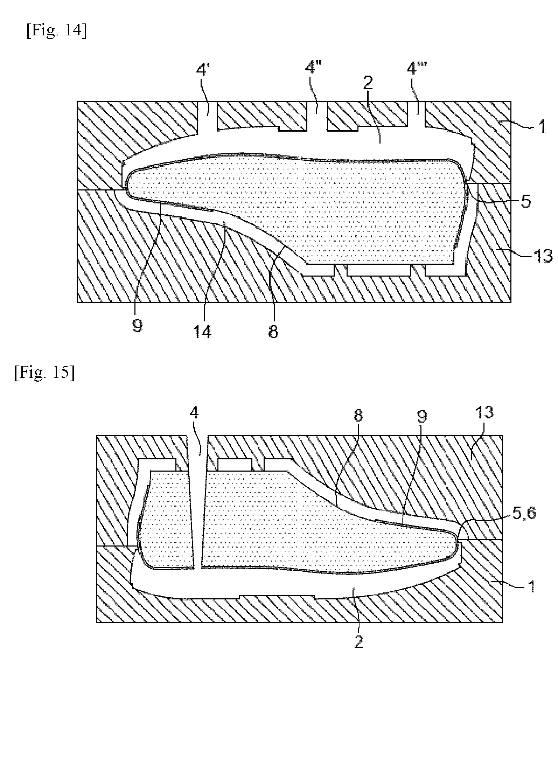

Par exemple, le moule peut comprendre un canal d'injection 4 débouchant dans la cavité 2, comme cela est illustré sur la figure 6. Selon un autre exemple, le canal d'injection 4 débouchant dans la cavité 2 peut traverser le support 8 de la tige 9, comme cela est illustré sur la figure 15.

Selon encore un autre exemple, la cavité 2 est configurée pour recevoir le mélange via au moins deux canaux 4', 4'', 4"' d'injections débouchant dans la cavité 2, comme cela est illustré sur la figure 14 sur laquelle sont représentés, à titre d'exemple, 3 canaux d'injection 4', 4", 4'''. Ainsi, le procédé 100 permet d'obtenir plus rapidement, et avec un remplissage plus homogène de la cavité du moule, une semelle 3 de la chaussure 10 reliée à une partie de la tige 9 de la chaussure 10.

Pour améliorer la solidité de la liaison entre la tige 9 et la semelle 3, il est en particulier possible de prévoir une étape complémentaire d'encollage 106 de la partie de la surface 7 de la partie de la tige 9, l'étape d'encollage 106 étant réalisée avant l'étape d'injection 107. Alternativement, ou en combinaison avec l'étape d'encollage 106, la partie de la surface 7 de la partie de la tige 9 peut comprendre des fils thermofusibles configurés pour fondre à une température d'injection du mélange. Ainsi, la résistance au décollement de la semelle et de la tige est renforcée.

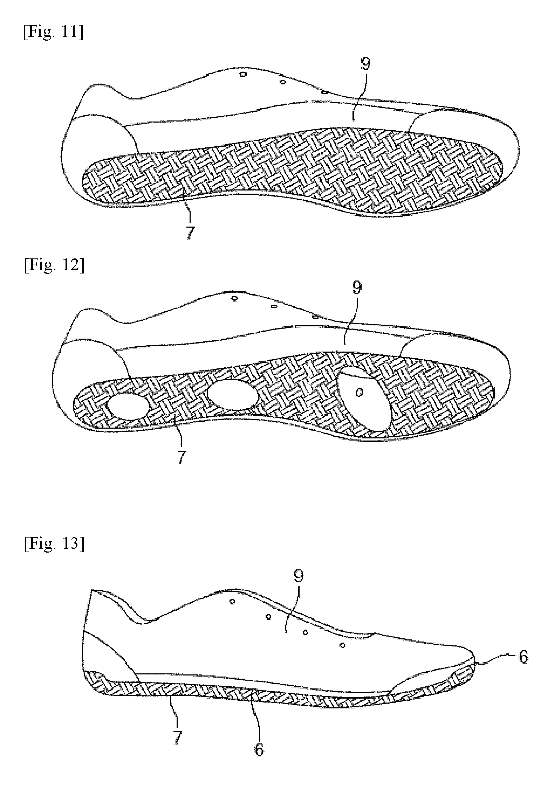

Selon un exemple de mise en œuvre du procédé, la partie de la surface 7 de la partie de la tige 9, destinée à être prise dans le matériau moussé de la semelle 3, est pleine comme cela est illustré sur la figure 11. Pour renforcer la résistance au décollement il est aussi possible de prévoir que la partie de la surface 7 de la partie de la tige 9, destinée à être prise dans le matériau moussé de la semelle 3, est trouée, i.e. la partie de la surface 7 comporte des trous comme cela est illustré sur la figure 12 ou sur la figure 3 avec par exemple 3 trous traversant la partie de la surface 7 de la partie de la tige 9 ; il est aussi possible de prévoir que la partie de la surface 7 est au moins en partie ouverte comme cela est illustré sur la figure 10 avec par exemple ladite partie de la surface 7 presque totalement ouverte hormis sur une partie de cette surface 7 à proximité de la zone d'accostage 6. Dans le cas représenté sur la figure 3, sur laquelle 3 trous traversent la partie de la surface 7 de la partie de la tige 9, et sur laquelle la partie de la tige 9 destinée à être prise dans le matériau moussé de la semelle 3 n'est pas placée sur un support 8, le couvercle 13 devra assurer la fermeture des trous ou des ouvertures de la partie de la surface 7 de la partie de la tige 9 pendant les étapes 105bis de pressurisation de la cavité 2 et d'injection 107 du mélange dans la cavité. A cet effet, le couvercle 13 pourra par exemple, comme cela est illustré sur la figure 3, s'appuyer, par exemple avec une surface intérieure sensiblement plate et plane, sur ladite partie de la surface 7 de la partie de la tige 9 de manière à fermer les trous ou les ouvertures présentes sur cette partie de la surface 7 de la partie de la tige 9.

Encore une autre manière de renforcer la résistance au décollement consiste à prévoir que la partie de la surface 7 de la partie de la tige 9, destinée à être prise dans le matériau moussé de la semelle 3, est texturée ou ajourée au contact ou à proximité de la zone d'accostage 6, comme cela est illustré sur la figure 13.

Afin d'améliorer une résistance à l'abrasion de la semelle 3, ou une rigidité de la semelle 3, le procédé 100 peut comprendre les étapes complémentaires de mise à disposition 104 et de positionnement 104bis d'un ou plusieurs inserts 12, 12', 12" configurés pour être positionnés dans la cavité 2 du moule 1;

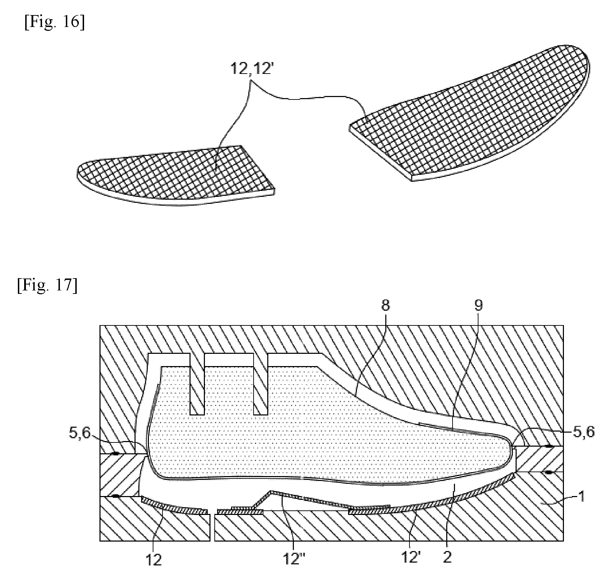

Par exemple, le ou les inserts 12, 12' représentés sur la figure 16 sont positionnés pour s'insérer au niveau d'une surface externe de la semelle, comme cela est illustré respectivement avant et après l'étape d'injection 107 du mélange dans la cavité 2 sur les figures 17 et 18 ; selon un autre exemple, un insert ou plusieurs inserts 12" peu(ven)t être(s) positionné(s) pour être noyé(s) à l'intérieur de la semelle 3, comme cela est illustré respectivement avant et après l'étape d'injection 107 du mélange dans la cavité 2 sur les figures 17 et 18.

Selon ces dispositions, la résistance à l'abrasion de la semelle est renforcée, ou une rigidité de la semelle est amélioré, selon que respectivement les inserts 12, 12' sont insérés vers une portion externe de la semelle 3, par exemple avec des inserts 12, 12' en caoutchouc ou matériau thermoplastique, ou que l'insert est ou les inserts 12" sont noyé(s) à l'intérieur de la semelle 3, par exemple avec des inserts 12" en plaque de carbone ou en matériau thermoplastique.

Selon un aspect, l'invention porte sur un article chaussant, par exemple une chaussure 10 obtenue par le procédé 100 selon l'un des modes de mise en œuvre précédemment décrit.

Selon un aspect, la description porte également sur dispositif comprenant un moule 1, et éventuellement un couvercle 13, et éventuellement un support 8, configurés pour mettre en œuvre le procédé 100 selon l'un des modes de mise en œuvre précédemment décrit

Selon un mode de réalisation, le dispositif comprend un moule 1 définissant une cavité 2 ouverte, une forme d'au moins une partie de la cavité 2 correspondant à une forme d'une semelle 3 de la chaussure 10, la cavité 2 étant configurée pour recevoir, via au moins un canal 4, 4', 4", 4'" d'injection débouchant dans la cavité 2, un mélange comprenant une matière fondue et un fluide supercritique, un rebord 5 d'une ouverture de la cavité 2 ouverte étant configuré pour être placé au contact d'une zone d'accostage 6 d'une surface 7 d'au moins une partie d'une tige 9 de la chaussure 10, de manière à ce que la surface 7 de l'au moins une partie de la tige 9 assure une fermeture de la cavité au niveau du contact entre la zone d'accostage 6 et le rebord 5, de sorte que ledit dispositif est ainsi configuré pour mettre en œuvre le procédé 100 de fabrication selon l'un des exemples de mise en œuvre décrit ci-avant.

Selon un exemple de réalisation complémentaire, le dispositif comprend en outre un couvercle 13 configuré pour être placé sur le moule 1 de manière à former avec le moule un volume fermé comprenant la cavité 2, et une partie complémentaire 14 de la cavité dans ledit volume fermé, l'au moins une partie de la tige 9 de la chaussure se trouvant à l'intérieur dudit volume fermé, la partie complémentaire 14 et la cavité 2 se trouvant de part et d'autre de la fermeture de la cavité 2 au niveau du contact entre la zone d'accostage 6 et le rebord 5 , le dispositif étant ainsi configuré pour mettre en œuvre le procédé 100 de fabrication, selon l'un des modes de mise en œuvre décrit ci-avant.

Selon un autre exemple de réalisation complémentaire, le dispositif comprend en outre un support 8 ayant une forme correspondant à une forme d'un pied, une surface externe du support 8 étant configurée pour être recouverte avec l'au moins une partie de la tige 9 de la chaussure, l'au moins une partie de la surface 7 de l'au moins une partie de la tige 9 recouvrant une partie de la surface externe du support correspondant à une plante dudit pied.

La chaussure 20 représentée à la figure 20 comprend une semelle comprenant une semelle intermédiaire 21 et une semelle d'usure 22, la majorité en masse de la semelle étant faite d'un matériau principal de semelle, et une tige 30 dont une majorité en masse est faite d'un matériau principal de tige.

Le matériau principal de semelle est un polyester.

Le matériau principal de la semelle intermédiaire 21 peut être un copolyester thermoplastique du type TPEE (thermoplastic polyether ester elastomer en langue anglaise) ou TPC-ET (Thermoplastic copolyester elastomers en langue anglaise). Ce sont des copolymères à blocs comprenant des segments rigides de polyester et des segments souples de polyéther et/ou de polyester. On peut également utiliser un polyuréthane thermoplastique à base ester.

Le copolyester de la semelle intermédiaire peut présenter un taux de cellules ouvertes compris entre 5 et 40%, et notamment entre 10 et 35%, et plus particulièrement entre 12 et 31%.

La semelle intermédiaire 21 peut être obtenue par injection de fluide supercritique, tel que décrit précédemment.

La semelle intermédiaire 21 est avantageusement comoulée avec la semelle d'usure 22. La semelle d'usure 22 peut également être collée avec la semelle intermédiaire 21.

La semelle intermédiaire 21, munie ou non de la semelle d'usure 22, peut être injectée sur la tige. Alternativement, la semelle et la tige 30 peuvent être réalisées séparément et assemblées ultérieurement.

Le matériau principal de la semelle d'usure 22 peut être choisi parmi les élastomères thermoplastiques de type TPV et les polyuréthanes thermoplastiques (TPU) à base ester.

Les vulcanisats thermoplastiques (TPV) entrent dans la classe des élastomères thermoplastiques, et possèdent jusqu'à un certain degré, les particularités des thermoplastes et des élastomères. En règle générale, ce sont des systèmes formés de deux phases, l'une molle, la phase élastique (EPDM) et l'autre dure, la phase thermoplastique (PP).

On utilise de préférence un vulcanisat thermoplastique comprenant une phase thermoplastique en copolyester thermoplastique, et notamment en TPEE. La phase molle peut être en poly(styrène/butadiène), également appelé caoutchouc SBR (pour styrene-butadiene rubber en langue anglaise), qui est un copolymère du styrène et du 1,3-butadiène. La phase thermoplastique peut être une phase thermoplastique en copolymère à blocs comprenant des segments rigides de polyester et des segments souples de polyéther et/ou de polyester.

Alternativement, la semelle d'usure 22 peut comprendre du caoutchouc. Dans ce cas, la semelle d'usure 22 est avantageusement fixée sur la semelle intermédiaire 21 à l'aide d'un primaire de collage spécifique qui permet de désassembler la semelle d'usure 22 en vue du recyclage de la chaussure.

La chaussure 20 peut également comprendre une première de propreté en TPEE ou en TPC-ET, pouvant être obtenue par moussage par injection de fluide supercritique, tel que décrit précédemment.

Le matériau principal de tige est également de préférence un polyester.

Avantageusement, la tige 30 comprend un lacet 23 en polyéthylène téréphtalate (PET).

La chaussure 20 peut comprendre des œillets de laçage 24 en polyéthylène téréphtalate (PET).

La tige 30 peut comprendre une partie inférieure 25 qui est une couche de protection collée sur la tige. La couche inférieure 25 est avantageusement en copolyester thermoplastique, et notamment du type TPEE ou TPC-ET. La couche inférieure 25 peut être réalisée sous forme d'un film non tissé comprenant par exemple un film de TPEE (par exemple de 0.3 mm) et une couche de TPEE thermofusible (par exemple de 0.2 mm).

La tige 30 peut également comprendre une partie supérieure 26 comprenant du polytéréphtalate d'éthylène (PET) et/ou un copolyester thermoplastique, par exemple du TPEE. La partie supérieure 26 comprend un composant principal de tige 26i réalisé dans ledit matériau principal de tige. La partie inférieure 25 est disposée sur la partie supérieure 26.

La figure 21 montre un exemple de réalisation de la partie supérieure 26. La partie supérieure 26 peut comprendre, notamment au niveau d'une région d'avant-pied 29, un ensemble 26a, 26b, 26c, 26d, 26e recouvert extérieurement par le composant principal de tige 26i, ledit ensemble comprenant une couche supérieure 26a en PET, par exemple un textile en PET, de préférence sous forme d'un tricot, et une couche inférieure 26b également en PET, par exemple un textile en PET, de préférence sous forme d'un tricot en trois dimensions, notamment un tricot indémaillable. Une couche centrale 26c en copolymère thermoplastique, par exemple en TPEE, et notamment en TPEE non tissé, est entourée vers le haut et vers le bas d'une couche intermédiaire d'adhésif 26d, 26e. Une couche intermédiaire supérieure 26d est disposée entre la couche centrale 26c et la couche supérieure 26a, tandis qu'une couche intermédiaire inférieure 26e est disposée entre la couche centrale 26c et la couche inférieure 26 b. Le composant principal de tige 26i peut comporter un textile en PET, notamment un tricot, de préférence un tricot indémaillable.

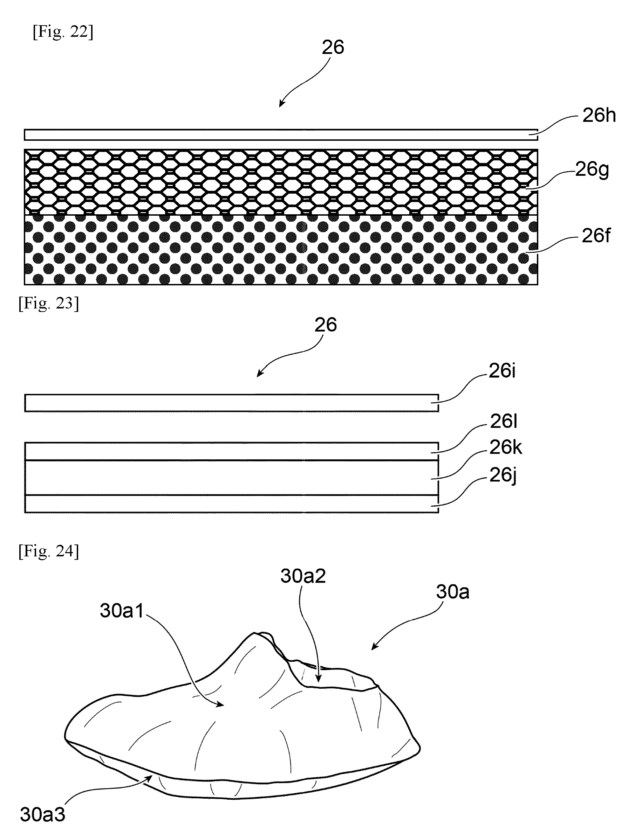

Dans un autre exemple de réalisation, illustré à la figure 22, la partie supérieure 26 peut comprendre le composant principal de tige 26i (figure 23) s'étendant sensiblement sur une majorité de la surface de la tige, et de préférence sur toute la surface de la tige. Le composant principal de tige 26i peut comporter un textile en PET, notamment un tricot, de préférence un tricot indémaillable.

Avantageusement, la partie supérieure 26 comprend, au niveau d'une région d'arrière-pied 28, située à l'arrière des œillets de laçage 24, une couche externe 26f de mousse, notamment perforée, en TPEE, une couche centrale 26g de textile en PET, notamment un tricot en trois dimensions, typiquement un tricot indémaillable, et une couche intérieure textile 26h de recouvrement en PET, par exemple un tricot en deux dimensions, prévue pour être la couche la plus interne de la chaussure, et prévue pour être en contact avec le pied de l'utilisateur. La couche externe 26f est recouverte intégralement par le composant principal de tige 26i.

La partie supérieure 26 peut comprendre, au niveau d'une région d'avant-pied 29, située à l'avant de la région d'arrière-pied 28 et entre la semelle intermédiaire 21 et les œillets de laçage 24, le composant principal de tige 26i, éventuellement recouvert, de préférence sur la face interne du composant principal de tige 26i, prévue pour être en contact avec le pied de l'utilisateur, d'une couche de renfort en PET. La couche de renfort peut être une couche laminée comprenant un textile en PET 26j, notamment un tricot en deux dimensions, une couche de PET non tissé 26k et/ou une couche de tricot en PET 26l (figure 23), de l'intérieur vers l'extérieur.

Avantageusement, la couche de tricot 26l en PET est positionnée dans le prolongement de la couche intérieure 26h de recouvrement en PET.

A l'arrière de la chaussure 20, entre la tige 30 et la semelle intermédiaire 21 est disposé un anneau de renfort 27, qui est un insert rigide injecté, l'insert étant positionné dans le moule, et assemblé ou non avec la tige. L'anneau 27 est avantageusement en copolyester thermoplastique, et notamment du type TPEE ou TPC-ET. L'anneau 27 peut être collé entre la tige 30 et la semelle intermédiaire 21.

L'anneau de renfort 27 peut être formé à partir de copolyester recyclé, et notamment du copolyester provenant d'une chaussure selon l'invention.

La tige 30 peut comprendre également un renfort supérieur 50 en mousse améliorant l'accueil de l'arrière-pied. Le renfort supérieur 50 peut être en PET, et notamment en PET non tissé.

La tige 30 comprend une région d'arrière-pied 28, une région d'avant-pied 29, une région latérale 31, une région médiale 32 et une région de coup-de-pied 33 comprenant une languette 34.

La languette 34 est avantageusement en PET, et notamment en PET non tissé.

La tige peut comprendre un fil en polyester, en notamment en TPEE, ce qui confère de la souplesse à la chaussure.

La semelle d'usure 22 est de préférence fabriquée en même temps qu'elle est solidarisée à la tige. Dans ce cas, la semelle d'usure est injectée directement sur la tige, c'est-à-dire sur la partie inférieure de la tige 30, de préférence avec le procédé décrit précédemment.

Avantageusement, le matériau principal de la tige 30 est compatible avec, ou dans un même matériau thermoplastique de base que, le matériau principal de semelle, de sorte que la semelle d'usure adhère à la tige, de préférence sans utiliser un agent de liaison externe.

Il est possible de manière alternative que la chaussure 10 soit fabriquée selon un montage classique de type Strobel. La semelle d'usure 22 peut être solidarisée à la tige 30 par collage. La semelle d'usure 22 et la tige 30 sont donc fabriquées séparément, puis solidarisées.

Les adhésifs pouvant être utilisés pour assembler les différentes parties de la chaussure, et notamment pour assembler la tige à la semelle, peuvent être des adhésifs à base de polyuréthane ou de polyester.

Dans une version imperméable à l'eau, le composant principal de tige peut être laminé avec une membrane en PET ou enduit avec du PET, à l'intérieur et/ou à l'extérieur de la tige.

Dans une version imperméable à l'eau, on peut en particulier mettre en œuvre un corps de tige (ou chausson) 30a tel qu'illustré à la figure 24. Le corps de tige 30a comprend une partie principale 30a1 imperméable comprenant deux couches en PET, à savoir une couche de textile et une membrane, la couche de textile pouvant être laminée sur la membrane. Une couche de renfort 30a2 en polytéréphtalate de butylène (PBT) peut être laminée avec la partie principale 30a1, de manière à former la couche la plus interne du corps de tige 30a, prévue pour être en contact avec le pied de l'utilisateur. En partie inférieure du corps de tige 30a peut être prévu un joint 30a3 comprenant du TPU et du PET, au niveau de la plante du pied de l'utilisateur. Le joint 30a3 rend étanche et renforce le dessous du corps de tige 30a. Dans le cas du mode de réalisation illustré aux figures 22 et 23, la couche de tricot 26l en PET et/ou la couche intérieure 26h de recouvrement en PET peuvent être formées par la partie principale 30a1 et la couche de renfort 30a2 du chausson 30a.

Grâce au choix spécifique des matériaux de l'invention, le recyclage de la chaussure est facilité puisqu'il n'est pas nécessaire de séparer les différents composants. La chaussure est broyée puis les broyats sont transformés en granulés thermoplastiques aptes à être transformés par une technique classique de mise en forme des thermoplastiques. Les granulés thermoplastiques comprennent donc un mélange thermoplastique comprenant les matériaux sélectionnés dans la présente invention lesquels sont compatibles entre eux lors de leur transformation à chaud, et présentent une bonne adhésion entre eux.

Les granulés thermoplastiques peuvent ainsi avantageusement être extrudés et injectés pour fabriquer tout ou partie d'une semelle d'usure ou d'une semelle intermédiaire.

Les granulés thermoplastiques peuvent être transformés également pour fabriquer un bout dur avant ou un contrefort arrière ou encore des œillets de laçage, un composant en mousse ou des billes en mousse agglomérées ou non.

## Revendications

1. Article chaussant (20), comprenant :
- une tige (30), une majorité en masse de la tige ou une majorité de la surface de la tige étant faite d'un matériau principal de tige, la tige comprenant éventuellement en outre un ou plusieurs matériau(x) auxiliaire(s) de tige ;
- une semelle (21, 22), une majorité en masse de la semelle étant faite d'un matériau principal de semelle, la semelle comprenant éventuellement en outre un ou plusieurs matériau(x) auxiliaire(s) de semelle ;
en ce que le matériau principal de tige, et éventuellement le ou les matériau(x) auxiliaire(s) de tige, est/sont sélectionné(s) parmi les polyesters et les matériaux chimiquement compatibles avec les polyesters ;
et en ce que le matériau principal de semelle, et éventuellement le ou les matériau(x) auxiliaire(s) de semelle, est/sont sélectionné(s) parmi les polyesters et les matériaux chimiquement compatibles avec les polyesters,
la tige (30) comprenant une partie supérieure (26) qui comprend du polytéréphtalate d'éthylène ou un copolyester thermoplastique qui est un copolymère à blocs comprenant des segments rigides de polyester et des segments souples de polyéther et/ou de polyester, la partie supérieure (26) comprenant un composant principal de tige (26i) dans ledit matériau principal de tige,
la partie supérieure (26) comprenant, au niveau d'une région d'arrière-pied (28), une couche externe (26f) de mousse, notamment perforée, en TPEE (thermoplastic polyether ester elastomer en langue anglaise), une couche centrale (26g) de textile en polytéréphtalate d'éthylène, la couche centrale (26g) étant un tricot en trois dimensions, et une couche intérieure textile (26h) de recouvrement en polytéréphtalate d'éthylène, la couche intérieure textile (26h) étant un tricot en deux dimensions, la couche externe (26f) étant recouverte par le composant principal de tige (26i) qui est un textile en polytéréphtalate d'éthylène.

2. Article chaussant (20) selon la revendication 1, **caractérisé en ce que** le matériau principal de tige comprend au moins l'un des matériaux suivants : un copolyester thermoplastique, le polytéréphtalate d'éthylène.

3. Article chaussant (20) selon la revendication 2, **caractérisé en ce que** le copolyester thermoplastique est un copolymère à blocs comprenant des segments rigides de polyester et des segments souples de polyéther et/ou de polyester.

4. Article chaussant (20) selon la revendication 3, **caractérisé en ce que** le copolyester thermoplastique est le TPEE (thermoplastic polyether ester elastomer en langue anglaise) ou le TPC-ET (thermoplastic copolyester elastomer en langue anglaise).

5. Article chaussant (20) selon l'une des revendications 1 à 4, **caractérisé en ce que** la tige (30) comprend une partie inférieure (25) comprenant un copolyester thermoplastique qui est un copolymère à blocs comprenant des segments rigides de polyester et des segments souples de polyéther et/ou de polyester.

6. Article (20) chaussant selon l'une des revendications 1 à 5, **caractérisé en ce que** la partie supérieure (26) comprend, notamment au niveau d'une région d'avant-pied (29), le composant principal de tige (26i) qui est un textile en polytéréphtalate d'éthylène, le composant principal de tige (26i) étant recouvert d'une couche de renfort (26j, 26k, 26l) en polytéréphtalate d'éthylène.

7. Article chaussant (20) selon l'une des revendications 1 à 6, **caractérisé en ce que** la tige (30) comprend un lacet (23) en polytéréphtalate d'éthylène.

8. Article chaussant (20) selon l'une des revendications 1 à 7, **caractérisé en ce que** la tige (30) comprend des œillets de laçage (24) en polytéréphtalate d'éthylène.

9. Article chaussant selon l'une des revendications 1 à 8, **caractérisé en ce que** la tige (30) comprend une languette (34) comprenant un renfort en polytéréphtalate d'éthylène non tissé.

10. Article chaussant (20) selon l'une des revendications 1 à 9, **caractérisé en ce qu'**il comprend, à l'arrière de l'article chaussant et au-dessus d'une semelle intermédiaire (21), un anneau de renfort (27) en copolyester thermoplastique.

11. Article chaussant (20) selon l'une des revendications 1 à 10, **caractérisé en ce que** le matériau principal de semelle comprend au moins l'un des matériaux suivants : un copolyester thermoplastique, un élastomère thermoplastique de type vulcanisat thermoplastique (TPV) comprenant une phase molle et une phase thermoplastique en copolyester thermoplastique, et un polyuréthane thermoplastique à base ester.

12. Article chaussant (20) selon l'une des revendications 1 à 11, **caractérisé en ce que** la semelle (21, 22) comprend une semelle intermédiaire (21) comprenant un polyuréthane thermoplastique à base ester ou un copolymère à blocs comprenant des segments rigides de polyester et des segments souples de polyéther et/ou de polyester.

13. Article chaussant (20) selon l'une des revendications 1 à 12, **caractérisé en ce que** la semelle (21, 22) comprend une semelle d'usure (22) comprenant un polyuréthane thermoplastique à base ester, ou un vulcanisat thermoplastique (TPV) comprenant une phase molle en poly(styrène/butadiène) et une phase thermoplastique en copolymère à blocs comprenant des segments rigides de polyester et des segments souples de polyéther et/ou de polyester.

14. Article chaussant (20) selon l'une des revendications 1 à 13, **caractérisé en ce qu'**il comprend une première de propreté comprenant un copolymère à blocs comprenant des segments rigides de polyester et des segments souples de polyéther et/ou de polyester.

15. Article chaussant (20) selon l'une des revendications 1 à 14, **caractérisé en ce que** la tige (30) et/ou la semelle (21, 22), comprend/comprennent chacune, un matériau recyclé d'une semelle et/ou de la tige d'une autre chaussure, et/ou un matériau recyclé d'une semelle et/ou de la tige d'une botte.

16. Article chaussant (20) selon l'une des revendications 1 à 15, **caractérisé en ce que** le rapport de la masse du matériau principal de tige, et éventuellement de la masse du ou des matériau(x) auxiliaire(s) de tige, sur la masse totale de la tige est supérieur ou égal à 40%.

17. Article chaussant (20) selon l'une des revendications 1 à 16, **caractérisé en ce que** le rapport de la masse dudit matériau principal de tige et de la masse du ou des matériau(x) auxiliaire(s) de tige, sur la masse totale de la tige est supérieur ou égal à 50%.

18. Article chaussant (20) selon l'une des revendications 1 à 17, **caractérisé en ce que** le rapport de la masse du matériau principal de semelle, et éventuellement de la masse du ou des matériau(x) auxiliaire(s) de semelle, sur la masse totale de la semelle est supérieur ou égal à 40%.

19. Article chaussant (20) selon l'une des revendications 1 à 18, **caractérisé en ce que** le rapport de la masse dudit matériau principal de semelle et de la masse du ou des matériau(x) auxiliaire(s) de semelle, sur la masse totale de la semelle est supérieure ou égale à 50%.

20. Article chaussant (20) selon l'une des revendications 1 à 19, **caractérisé en ce que** le matériau principal de tige, et éventuellement le ou les matériau(x) auxiliaire(s) de tige, et le matériau principal de semelle, et éventuellement le ou les matériau(x) auxiliaire(s) de semelle, ont une densité inférieure ou égale à 1,5 g/cm³, de préférence inférieure ou égale à 1,05 g/cm³.

21. Article chaussant (20) selon l'une des revendications 1 à 20, **caractérisé en ce que** le matériau principal de semelle, et éventuellement le ou les matériau(x) auxiliaire(s) de semelle, est/sont issu(s) au moins en partie du recyclage d'au moins un autre article chaussant (10).

22. Article chaussant (20) selon l'une des revendications 1 à 21, **caractérisé en ce que** la tige (30) comprend un corps de tige (30a) comprenant : une partie principale (30a1) imperméable comprenant deux couches en PET dont une couche de textile et une membrane, une couche de renfort (30a2) en polytéréphtalate de butylène laminée avec la partie principale (30a1) pour former la couche la plus interne du corps de tige (30a), et un joint (30a3), situé en partie inférieure du corps de tige (30a) et comprenant un polyuréthane thermoplastique et du polytéréphtalate d'éthylène.

23. Article chaussant (20) selon l'une des revendications 1 à 22, **caractérisé en ce que** le composant principal de tige (26i) est laminé avec une membrane en polytéréphtalate d'éthylène ou enduit avec du polytéréphtalate d'éthylène, à l'intérieur et/ou à l'extérieur de la tige (30).

24. Procédé de fabrication d'un article chaussant (20) selon la revendication 1, comprenant :
- la formation d'une semelle d'usure (22),
- la formation d'une semelle intermédiaire (21),
- la solidarisation de la semelle intermédiaire (21) à la semelle d'usure (22), notamment par le collage et/ou l'injection de la semelle intermédiaire (21) sur la semelle d'usure (22), de manière à former une semelle (21, 22), et
- le collage d'une tige (30) sur la semelle (21, 22) ainsi formée.

## Patentansprüche

1. Schuhartikel (20), umfassend:
- einen Schaft (30), wobei ein Großteil der Masse des Schafts oder ein Großteil der Oberfläche des Schafts aus einem Hauptmaterial des Schafts besteht, wobei der Schaft gegebenenfalls ferner ein oder mehrere Hilfsmaterialien des Schafts umfasst;
- eine Sohle (21, 22), wobei ein Großteil der Masse der Sohle aus einem Hauptmaterial der Sohle besteht, wobei die Sohle gegebenenfalls ferner ein oder mehrere Hilfsmaterialien der Sohle umfasst;
dass das Hauptmaterial des Schafts und gegebenenfalls das oder die Hilfsmaterialien des Schafts aus Polyestern und Materialien, die chemisch mit Polyestern kompatibel sind, ausgewählt sind;
und dass das Hauptmaterial der Sohle und gegebenenfalls das oder die Hilfsmaterialien der Sohle aus Polyestern und Materialien, die chemisch mit Polyestern kompatibel sind, ausgewählt sind,
wobei der Schaft (30) einen oberen Teil (26) umfasst, der Polyethylenterephthalat oder einen thermoplastischen Copolyester umfasst, der ein Blockcopolymer ist, das starre Polyestersegmente und weiche Polyether- und/oder Polyestersegmente umfasst, wobei der obere Teil (26) eine Hauptkomponente (26i) des Schafts in dem Hauptmaterial des Schafts umfasst,
wobei der obere Teil (26) in dem Bereich eines Hinterfußbereichs (28) eine äußere Textilschicht (26f) aus insbesondere perforiertem Schaumstoff aus TPEE (thermoplastic polyether ester elastomer in englischer Sprache), eine mittlere Textilschicht (26g) aus Polyethylenterephthalat, wobei die mittlere Schicht (26g) ein dreidimensionales Gewirke ist, und eine innere Textilabdeckungsschicht (26h) aus Polyethylenterephthalat umfasst, wobei die innere Textilschicht (26h) ein zweidimensionales Gewirke ist, wobei die äußere Schicht (26f) von der Hauptkomponente (26i) des Schafts bedeckt ist, die ein Textil aus Polyethylenterephthalat ist.

2. Schuhartikel (20) nach Anspruch 1, **dadurch gekennzeichnet, dass** das Hauptmaterial des Schafts mindestens eines der folgenden Materialien umfasst: einen thermoplastischen Copolyester, das Polyethylenterephthalat.

3. Schuhartikel (20) nach Anspruch 2, **dadurch gekennzeichnet, dass** der thermoplastische Copolyester ein Blockcopolymer ist, das starre Polyestersegmente und weiche Polyether- und/oder Polyestersegmente umfasst.

4. Schuhartikel (20) nach Anspruch 3, **dadurch gekennzeichnet, dass** der thermoplastische Copolyester TPEE (thermoplastic polyether ester elastomer in englischer Sprache) oder TPC-ET (thermoplastic copolyester elastomer in englischer Sprache) ist.

5. Schuhartikel (20) nach einem der Ansprüche 1 bis 4, **dadurch gekennzeichnet, dass** der Schaft (30) einen unteren Teil (25) umfasst, der einen thermoplastischen Copolyester umfasst, der ein Blockcopolymer ist, das starre Polyestersegmente und weiche Polyether- und/oder Polyestersegmente umfasst.

6. Schuhartikel (20) nach einem der Ansprüche 1 bis 5, **dadurch gekennzeichnet, dass** der obere Teil (26) insbesondere in dem Bereich eines Vorderfußbereichs (29) die Hauptkomponente (26i) des Schafts umfasst, die ein Textil aus Polyethylenterephthalat ist, wobei die Hauptkomponente (26i) des Schafts mit einer Verstärkungsschicht (26j, 26k, 26l) aus Polyethylenterephthalat bedeckt ist.

7. Schuhartikel (20) nach einem der Ansprüche 1 bis 6, **dadurch gekennzeichnet, dass** der Schaft (30) einen Schnürsenkel (23) aus Polyethylenterephthalat umfasst.

8. Schuhartikel (20) nach einem der Ansprüche 1 bis 7, **dadurch gekennzeichnet, dass** der Schaft (30) Schnürösen (24) aus Polyethylenterephthalat umfasst.

9. Schuhartikel nach einem der Ansprüche 1 bis 8, **dadurch gekennzeichnet, dass** der Schaft (30) eine Lasche (34) umfasst, die eine Verstärkung aus Polyethylenterephthalat-Vliesstoff umfasst.

10. Schuhartikel (20) nach einem der Ansprüche 1 bis 9, **dadurch gekennzeichnet, dass** er auf der Rückseite des Schuhartikels und oberhalb einer Zwischensohle (21) einen Verstärkungsring (27) aus thermoplastischem Copolyester umfasst.

11. Schuhartikel (20) nach einem der Ansprüche 1 bis 10, **dadurch gekennzeichnet, dass** das Hauptmaterial der Sohle mindestens eines der folgenden Materialien umfasst: einen thermoplastischen Copolyester, ein thermoplastisches Elastomer vom Typ thermoplastisches Vulkanisat (TPV), das eine weiche Phase und eine thermoplastische Phase aus thermoplastischem Copolyester umfasst, und ein thermoplastisches Polyurethan auf Esterbasis.

12. Schuhartikel (20) nach einem der Ansprüche 1 bis 11, **dadurch gekennzeichnet, dass** die Sohle (21, 22) eine Zwischensohle (21) umfasst, die ein thermoplastisches Polyurethan auf Esterbasis oder ein Blockcopolymer umfasst, das starre Polyestersegmente und weiche Polyether- und/oder Polyestersegmente umfasst.

13. Schuhartikel (20) nach einem der Ansprüche 1 bis 12, **dadurch gekennzeichnet, dass** die Sohle (21, 22) eine Laufsohle (22) umfasst, die ein thermoplastisches Polyurethan auf Esterbasis oder ein thermoplastisches Vulkanisat (TPV) umfasst, das eine weiche Phase aus Poly(styrol/butadien) und eine thermoplastische Phase aus einem Blockcopolymer umfasst, das starre Polyestersegmente und weiche Polyether- und/oder Polyestersegmente umfasst.

14. Schuhartikel (20) nach einem der Ansprüche 1 bis 13, **dadurch gekennzeichnet, dass** er eine Einlegesohle umfasst, die ein Blockcopolymer umfasst, das starre Polyestersegmente und weiche Polyether- und/oder Polyestersegmente umfasst.

15. Schuhartikel (20) nach einem der Ansprüche 1 bis 14, **dadurch gekennzeichnet, dass** der Schaft (30) und/oder die Sohle (21, 22) jeweils ein recyceltes Material einer Sohle und/oder des Schafts eines anderen Schuhs und/oder ein recyceltes Material einer Sohle und/oder des Schafts eines Stiefels umfassen.

16. Schuhartikel (20) nach einem der Ansprüche 1 bis 15, **dadurch gekennzeichnet, dass** das Verhältnis der Masse des Hauptmaterials des Schafts und gegebenenfalls der Masse des oder der Hilfsmaterialien des Schafts zur Gesamtmasse des Schafts größer oder gleich 40 % ist.

17. Schuhartikel (20) nach einem der Ansprüche 1 bis 16, **dadurch gekennzeichnet, dass** das Verhältnis der Masse des Hauptmaterials des Schafts und der Masse des oder der Hilsmaterialien des Schafts zur Gesamtmasse des Schafts größer oder gleich 50 % ist.

18. Schuhartikel (20) nach einem der Ansprüche 1 bis 17, **dadurch gekennzeichnet, dass** das Verhältnis der Masse des Hauptmaterials der Sohle und gegebenenfalls der Masse des oder der Hilfsmaterialien der Sohle zu der Gesamtmasse der Sohle größer oder gleich 40 % ist.

19. Schuhartikel (20) nach einem der Ansprüche 1 bis 18, **dadurch gekennzeichnet, dass** das Verhältnis der Masse des Hauptmaterials der Sohle und der Masse des oder der Hilfsmaterialien der Sohle zur Gesamtmasse der Sohle größer oder gleich 50 % ist.

20. Schuhartikel (20) nach einem der Ansprüche 1 bis 19, **dadurch gekennzeichnet, dass** das Hauptmaterial des Schafts und gegebenenfalls das oder die Hilfsmaterialen des Schafts und das Hauptmaterial der Sohle und gegebenenfalls das oder die Hilfsmaterialen der Sohle eine Dichte von kleiner oder gleich 1,5 g/cm³, vorzugsweise kleiner oder gleich 1,05 g/cm³, haben.

21. Schuhartikel (20) nach einem der Ansprüche 1 bis 20, **dadurch gekennzeichnet, dass** das Hauptmaterial der Sohle und gegebenenfalls das oder die Hilfsmaterialen der Sohle mindestens teilweise aus dem Recycling von mindestens einem anderen Schuhartikel (10) stammen.

22. Schuhartikel (20) nach einem der Ansprüche 1 bis 21, **dadurch gekennzeichnet, dass** der Schaft (30) einen Schaftkörper (30a) umfasst, der umfasst: einen undurchlässigen Hauptteil (30a1), der zwei PET-Schichten umfasst, darunter eine Textilschicht und eine Membran, eine Verstärkungsschicht (30a2) aus Polybutylenterephthalat, die mit dem Hauptteil (30a1) laminiert ist, um die innerste Schicht des Schaftkörpers (30a) zu bilden, und eine Dichtung (30a3), die sich in dem unteren Teil des Schaftkörpers (30a) befindet und ein thermoplastisches Polyurethan und Polyethylenterephthalat umfasst.

23. Schuhartikel (20) nach einem der Ansprüche 1 bis 22, **dadurch gekennzeichnet, dass** die Hauptkomponente (26i) des Schafts, innerhalb und/oder außerhalb des Schafts (30), mit einer Membran aus Polyethylenterephthalat laminiert oder mit Polyethylenterephthalat beschichtet ist.

24. Verfahren zur Herstellung eines Schuhartikels (20) nach Anspruch 1, umfassend:
- Bilden einer Laufsohle (22),
- Bilden einer Zwischensohle (21),
- Verbinden der Zwischensohle (21) mit der Laufsohle (22), insbesondere durch Aufkleben und/oder Einspritzen der Zwischensohle (21) auf die Laufsohle (22), so dass eine Sohle (21, 22) gebildet wird, und
- Aufkleben eines Schafts (30) auf die so gebildete Sohle (21, 22).

## Claims

1. A footwear (20), comprising:
- an upper (30), a majority by mass of the upper or a majority of the surface of the upper being made of a main upper material, the upper optionally further comprising one or more auxiliary upper material(s);
- a sole (21, 22), a majority by mass of the sole being made of a main sole material, the sole optionally further comprising one or more auxiliary sole material(s);
in that the main upper material, and optionally the auxiliary upper material(s), is/are selected from polyesters and materials chemically compatible with polyesters;
and in that the main sole material, and optionally the auxiliary sole material(s), is/are selected from polyesters and materials chemically compatible with polyesters,
the upper (30) comprising a top part (26) which comprises polyethylene terephthalate or a thermoplastic copolyester which is a block copolymer comprising rigid segments of polyester and flexible segments of polyether and/or polyester, the top part (26) comprising a main upper component (26i) in said main upper material,
the top part (26) comprising, at the level of a rearfoot region (28), an external layer (26f) of foam, in particular perforated, made of TPEE (thermoplastic polyether ester elastomer), a central textile layer (26g) made of polyethylene terephthalate, the central layer (26g) being a three-dimensional knitting, and an inner covering textile layer (26h) made of polyethylene terephthalate, the inner textile layer (26h) being a two-dimensional knitting, the external layer (26f) being covered by the main upper component (26i) which is a polyethylene terephthalate textile.

2. The footwear (20) according to claim 1, **characterized in that** the main upper material comprises at least one of the following materials: a thermoplastic copolyester, the polyethylene terephthalate.

3. The footwear (20) according to claim 2, **characterized in that** the thermoplastic copolyester is a block copolymer comprising rigid segments of polyester and flexible segments of polyether and/or polyester.

4. The footwear (20) according to claim 3, **characterized in that** the thermoplastic copolyester is TPEE (thermoplastic polyether ester elastomer) or TPC-ET (thermoplastic copolyester elastomer).

5. The footwear (20) according to any of claims 1 to 4, **characterized in that** the upper (30) comprises a lower part (25) comprising a thermoplastic copolyester which is a block copolymer comprising rigid segments of polyester and flexible segments of polyether and/or polyester.

6. The footwear (20) according to any of claims 1 to 5, **characterized in that** the upper part (26) comprises, in particular at a forefoot region (29), the main upper component (26i) which is a textile made of polyethylene terephthalate, the main upper component (26i) being covered with a reinforcing layer (26j, 26k, 26l) made of polyethylene terephthalate.

7. The footwear (20) according to any of claims 1 to 6, **characterized in that** the upper (30) comprises a lace (23) made of polyethylene terephthalate.

8. The footwear (20) according to any of claims 1 to 7, **characterized in that** the upper (30) comprises lacing eyelets (24) made of polyethylene terephthalate.

9. The footwear according to any of claims 1 to 8, **characterized in that** the upper (30) comprises a tongue (34) comprising a non-woven polyethylene terephthalate reinforcement.

10. The footwear (20) according to any of claims 1 to 9, **characterized in that** it comprises, at the rear of the footwear and above a midsole (21), a reinforcing ring (27) made of thermoplastic copolyester.

11. The footwear (20) according to any of claims 1 to 10, **characterized in that** the main sole material comprises at least one of the following materials: a thermoplastic copolyester, a thermoplastic elastomer of the thermoplastic vulcanizate (TPV) type comprising a soft phase and a thermoplastic phase made of thermoplastic copolyester, and an ester-based thermoplastic polyurethane.

12. The footwear (20) according to any of claims 1 to 11, **characterized in that** the sole (21, 22) comprises a midsole (21) comprising an ester-based thermoplastic polyurethane or a block copolymer comprising rigid segments of polyester and flexible segments of polyether and/or polyester.

13. The footwear (20) according to any of claims 1 to 12, **characterized in that** the sole (21, 22) comprises an outsole (22) comprising an ester-based thermoplastic polyurethane, or a thermoplastic vulcanizate (TPV) comprising a soft phase of poly(styrene/butadiene) and a thermoplastic phase of block copolymer comprising rigid segments of polyester and flexible segments of polyether and/or polyester.

14. The footwear (20) according to any of claims 1 to 13, **characterized in that** it comprises an insole comprising a block copolymer comprising rigid segments of polyester and flexible segments of polyether and/or polyester.

15. The footwear (20) according to any of claims 1 to 14, **characterized in that** the upper (30) and/or the sole (21, 22), each comprise(s), a recycled material from a sole and/or from the upper of another shoe, and/or a material recycled from a sole and/or the upper of a boot.

16. The footwear (20) according to any of claims 1 to 15, **characterized in that** the ratio of the mass of the main upper material, and optionally of the mass of the auxiliary upper material(s), to the total mass of the upper is greater than or equal to 40%.

17. The footwear (20) according to any of claims 1 to 16, **characterized in that** the ratio of the mass of said main upper material and the mass of the auxiliary upper material(s), to the total mass of the upper is greater than or equal to 50%.

18. The footwear (20) according to any of claims 1 to 17, **characterized in that** the ratio of the mass of the main sole material, and optionally of the mass of the auxiliary sole material(s), to the total mass of the sole is greater than or equal to 40%.

19. The footwear (20) according to any of claims 1 to 18, **characterized in that** the ratio of the mass of said main sole material and the mass of the auxiliary sole material(s), to the total mass of the sole is greater than or equal to 50%.

20. The footwear (20) according to any of claims 1 to 19, **characterized in that** the main upper material, and optionally the auxiliary upper material(s), and the main sole material, and optionally the auxiliary sole material(s) have a density less than or equal to 1.5 g/cm³, preferably less than or equal to 1.05 g/cm³.

21. The footwear (20) according to any of claims 1 to 20, **characterized in that** the main sole material, and optionally the auxiliary sole material(s), is/are derived from at least partly from the recycling of at least one other footwear (10).

22. The footwear (20) according to any of claims 1 to 21, **characterized in that** the upper (30) comprises an upper body (30a) comprising: a main waterproof part (30a1) comprising two layers made of PET whose a layer of textile and a membrane, a reinforcing layer (30a2) made of polybutylene terephthalate laminated with the main part (30a1) to form the innermost layer of the upper body (30a), and a seal (30a3), located in the lower part of the upper body (30a) and comprising a thermoplastic polyurethane and the polyethylene terephthalate.

23. The footwear (20) according to any of claims 1 to 22, **characterized in that** the main upper component (26i) is laminated with a polyethylene terephthalate membrane or coated with polyethylene terephthalate, inside and/or outside the upper (30).

24. A method for manufacturing a footwear (20) according to claim 1, comprising:
- the formation of an outsole (22),
- the formation of a midsole (21),
- the securing of the midsole (21) to the outsole (22), in particular by bonding and/or injecting the midsole (21) onto the outsole (22), so as to form a sole (21, 22), and
- the gluing of an upper (30) to the sole (21, 22) thus formed.
